(19) Europäisches Patentamt
European Patent Office
Office européen des brevets

(11) **EP 3 453 487 B1**

(12) **EUROPÄISCHE PATENTSCHRIFT**

(45) Veröffentlichungstag und Bekanntmachung des Hinweises auf die Patenterteilung:
**21.07.2021  Patentblatt 2021/29**

(51) Int Cl.:
**B23Q 17/22** *(2006.01)*          **B23B 25/06** *(2006.01)*
**G01B 3/22** *(2006.01)*          **G01B 5/252** *(2006.01)*

(21) Anmeldenummer: **18192733.6**

(22) Anmeldetag: **05.09.2018**

(54) **VERFAHREN ZUM POSITIONIEREN EINES MITTELPUNKTS AUF EINER GEOMETRISCHEN ACHSE BEI EINER WERKZEUGMASCHINE**

METHOD FOR POSITIONING A CENTRE ON A GEOMETRIC AXIS IN A MACHINE TOOL

PROCÉDÉ DE POSITIONNEMENT D'UN POINT CENTRAL SUR UN AXE GÉOMÉTRIQUE DANS UNE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2017   DE 102017121087**

(43) Veröffentlichungstag der Anmeldung:
**13.03.2019   Patentblatt 2019/11**

(73) Patentinhaber: **Index-Werke GmbH & Co. KG Hahn & Tessky**
**73730 Esslingen (DE)**

(72) Erfinder:
• **Großmann, Stefan**
**73669 Lichtenwald (DE)**
• **Stifter, Stefan**
**73061 Ebersbach (DE)**
• **Reinert, Markus**
**73235 Weilheim an der Teck (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
**EP-A2- 1 182 003     DE-A1- 2 727 062**
**DE-U1- 7 718 280     KR-A- 20140 001 449**

**Beschreibung**

Die Erfindung betrifft ein Verfahren zum Positionieren eines Mittelpunkts einer zweiten Werkzeugmaschineneinheit einer Werkzeugmaschine auf einer geometrischen Achse einer ersten Werkzeugmaschineneinheit der Werkzeugmaschine, wobei die zweite Werkzeugmaschineneinheit eine zu dem Mittelpunkt konzentrische abtastbare und auf einer Kreiszylinderfläche liegende Kreisbahn aufweist und wobei die erste Werkzeugmaschineneinheit eine um eine mit der geometrischen Achse zusammenfallende Drehachse drehbare Komponente aufweist.

Eine hierzu verwendbare Vorrichtung ist beispielsweise aus der DE 77 18 280 bekannt.

Ein derartiges Verfahren wird üblicherweise iterativ und manuell vorgenommen, wobei die Dauer dieses Verfahrens von der Geschicklichkeit einer dieses Verfahren durchführenden Bedienungsperson der Werkzeugmaschine abhängig ist.

Der Erfindung liegt daher die Aufgabe zugrunde, ein Verfahren der eingangs beschriebenen Art derart zu verbessern, dass dieses für eine Bedienungsperson einfach, zuverlässig und mit geringem Zeitaufwand durchführbar ist.

Diese Aufgabe wird bei einem Verfahren der eingangs beschriebenen Art erfindungsgemäß dadurch gelöst, dass eine Messeinheit an der ersten Werkzeugmaschineneinheit zu der geometrischen Achse definiert angeordnet wird und mit der Messeinheit die Lage der Kreisbahn in einer durch die Kreisbahn festgelegten geometrischen Ebene relativ zur geometrischen Achse dadurch ermittelt wird, dass mittels der Messeinheit eine Bestimmung der Lage der Kreisbahn durch Ermitteln der Positionen von drei in definierten Winkelabständen voneinander auf der Kreisbahn liegenden Messpunkten relativ zur geometrischen Achse erfolgt, dass auf der Basis der Positionen der Messpunkte und des bekannten Radius der Kreisbahn die Lage des Mittelpunkts der Kreisbahn in der geometrischen Ebene relativ zur geometrischen Achse und einer durch die geometrische Achse hindurch verlaufenden Referenzrichtung rechnerisch ermittelt wird und dass unter Heranziehung von werkzeugmaschinenbedingten Einstellrichtungen der Werkzeugmaschineneinheiten relativ zueinander den Einstellrichtungen zugeordnete Einstellwege in der geometrischen Ebene zur Positionierung des Mittelpunkts auf der geometrischen Achse rechnerisch bestimmt werden und dass die Werkzeugmaschineneinheiten relativ zueinander entsprechend den Einstellwegen bewegt werden.

Der Vorteil der Erfindung ist darin zu sehen, dass durch die rechnerische Bestimmung des Mittelpunkts relativ zur geometrischen Achse und zur Referenzrichtung die Möglichkeit besteht, auch rechnerisch die in den Einstellrichtungen erforderlichen Einstellwege zum Verschieben des Mittelpunkts auf die geometrische Achse bestimmt werden können und dadurch in einfacher Weise durch Bewegen der Werkzeugmaschineneinheiten relativ zueinander der Mittelpunkt der Kreisbahn so bewegt werden kann, dass dieser schließlich auf der geometrischen Achse liegt.

Hinsichtlich der Erfassung der Positionen der drei Messpunkte wurden im Zusammenhang mit der bisherigen Erläuterung der erfindungsgemäßen Lösung keine näheren Angaben gemacht.

Prinzipiell könnten die Positionen der Messpunkte mit der Messeinheit in unterschiedlichster Weise ermittelt werden.

Beispielsweise wäre es denkbar, drei Messeinheiten zu verwenden und diese in Richtung auf die geometrische Achse zuzubewegen, um gleichzeitig die Positionen der drei Messpunkte zu ermitteln.

So sieht eine vorteilhafte Lösung vor, dass die Positionen der drei Messpunkte durch Verschwenken der Messeinheit um die geometrische Achse in eine dem jeweiligen Messpunkt entsprechende und radial zur geometrischen Achse verlaufende Messrichtung festgelegt wird und dass in der jeweiligen Messrichtung mittels der Messeinheit die Position des jeweiligen Messpunktes ermittelt wird.

Dabei könnte die Position des jeweiligen Messpunktes durch eine Messung des Abstandes des Messpunktes von der geometrischen Achse in der jeweiligen Messrichtung bestimmt werden.

Eine besonders einfach auszuführende vorteilhafte Lösung sieht vor, dass die Position des jeweiligen Messpunktes durch Messen eines Abstandes desselben von einer um die geometrische Achse umlaufenden Referenzkreisbahn in radialer Richtung zur geometrischen Achse bestimmt wird.

Dabei ist vorzugsweise die Referenzkreisbahn so gewählt, dass deren Radius größer ist als der Radius der Kreisbahn, deren Lage bestimmt werden soll.

Der Vorteil der Erfassung der Positionen der Messpunkte durch Erfassen eines Abstandes derselben von einer Referenzkreisbahn ist darin zu sehen, dass die Referenzkreisbahn hinsichtlich ihres Absolutwertes nicht festgelegt werden muss, jedoch beim Erfassen der Messpunkte konstant bleiben muss und lediglich einen Referenzwert für die Messeinheit definiert und somit die Messeinheit jeweils ausgehend von ihrem Referenzwert den Abstand der Messpunkte von der Referenzkreisbahn um die geometrische Achse zu ermittelt.

Hinsichtlich der Lage der Messpunkte wurden im Zusammenhang mit der Erfassung der Positionen keine näheren Angaben gemacht.

So sieht eine vorteilhafte Lösung vor, dass die drei Messpunkte so gewählt werden, dass sie innerhalb eines Winkelbereichs von 180° um die geometrische Achse liegen.

Besonders vorteilhaft lässt sich der Mittelpunkt der Kreisbahn rechnerisch dann bestimmen, wenn die drei Messpunkte so gewählt werden, dass jeweils ein Winkelbereich von 90° zwischen einem ersten Messpunkt und einem zweiten Messpunkt sowie dem zweiten Messpunkt und einem dritten Messpunkt liegt.

Hinsichtlich der Erfassung der werkzeugmaschinenseitigen Einstellrichtungen relativ zu den Positionen der Messpunkte oder den Messrichtungen der Messpunkte wurden bislang keine näheren Angaben gemacht.

So sieht eine vorteilhafte Lösung vor, dass die Erfassung der werkzeugmaschinenseitigen Einstellrichtungen durch Anordnung der Position eines der drei Messpunkte in einer radial zur geometrischen Achse verlaufenden und zu einer der Einstellrichtungen parallelen geometrischen Messrichtung erfolgt.

Eine derartige Anordnung der geometrischen Messrichtung lässt sich beispielsweise dadurch erreichen, dass eine Projektion einer eine der Einstellrichtungen definierten Kante der zweiten Werkzeugmaschineneinheit in Richtung der Messeinheit erfolgt und somit mit Hilfe der Projektion der Kante oder eines Schattens dieser Kante auf die Messeinheit eine Ausrichtung der Messrichtung parallel zu dieser Kante erfolgen kann.

Besonders einfach ist es, wenn ein erster der drei Messpunkte in der durch die geometrische Achse hindurch verlaufenden und zu einer der Einstellrichtungen parallelen Messrichtung angeordnet wird.

Eine andere Lösung zur Erfassung der werkzeugmaschinenseitigen Einstellrichtungen relativ zu den Positionen der Messpunkte sieht vor, dass die Erfassung der werkzeugmaschinenseitigen Einstellrichtungen durch eine erste Ermittlung der Lage des Mittelpunkts der zweiten Werkzeugmaschineneinheit in einer ersten Erfassungsposition, eine nachfolgende Relativbewegung der beiden Werkzeugmaschineneinheiten längs einer ausgewählten der Einstellrichtungen in eine zweite Erfassungsposition und in dieser eine zweite Ermittlung der Lage des Mittelpunkts der zweiten Werkzeugmaschineneinheit erfolgt und dass durch Ermittlung der Ausrichtung einer Verbindungslinie zwischen den Mittelpunkten in der ersten und zweiten Erfassungsposition die Lage und der Verlauf der ausgewählten Einstellrichtung bestimmt wird, wobei insbesondere der Verlauf der ausgewählten Einstellrichtung relativ zur geometrischen Achse ermittelt wird.

Besonders vorteilhaft ist es bei dieser Lösung, wenn die Messrichtungen, in welchen die Positionen der Messpunkte ermittelt werden, in der ersten Erfassungsposition und in der zweiten Erfassungsposition identisch sind.

Um die Bedienungsperson bei der Bewegung der Werkzeugmaschineneinheiten relativ zueinander zur Positionierung des Mittelpunkts auf der geometrischen Achse entsprechend den Einstellwegen zu unterstützen, ist vorzugsweise vorgesehen, dass beim Bewegen der Werkzeugmaschineneinheiten in mindestens einer der Einstellrichtungen eine Erfassung des mindestens einen durchlaufenden Einstellwegs mittels der Messeinheit erfolgt.

Noch besser ist es, wenn beim Bewegen der Werkzeugmaschineneinheiten in den Einstellrichtungen eine Erfassung der durchlaufenen Einstellwege mittels der Messeinheit erfolgt, so dass dadurch in einfacher Weise sichergestellt werden kann, dass der rechnerisch ermittelte Einstellweg auch tatsächlich durchlaufen wird.

Vorzugsweise ist dabei vorgesehen, dass zur Erfassung der Bewegung der Werkzeugmaschineneinheiten relativ zueinander in den Einstellrichtungen die Messeinheit durch Verschwenken um die geometrische Achse in einer jeweils parallel zur jeweiligen Einstellrichtung verlaufenden Messrichtung positioniert wird, so dass dadurch in einfacher Weise mit der Messeinheit die zu durchlaufenden Einstellwege überwacht werden können.

Das erfindungsgemäße Verfahren lässt sich insbesondere dann durchführen, wenn eine Zylinderachse der Kreiszylinderfläche parallel zu der geometrischen Achse verläuft.

Ferner ist vorzugsweise vorgesehen, dass die Einstellrichtungen einerseits senkrecht zueinander und andererseits senkrecht zur geometrischen Achse verlaufen.

Die bislang beschriebenen Verfahrensschritte können alle vom Grundsatz her manuell erfolgen.

Zur rechnerischen Ermittlung des Mittelpunkts der Kreisbahn hat es sich als besonders vorteilhaft erwiesen, wenn von der Messeinheit ermittelte Positionen der Messpunkte einer Rechnereinheit übermittelt werden, die den Mittelpunkt der Kreisbahn relativ zur geometrischen Achse und einer durch die geometrische Achse hindurch verlaufenden Referenzrichtung ermittelt, insbesondere da sich angesichts der komplexen Mathematik eine numerische Ermittlung des Mittelpunktes anbietet.

Ferner ist vorzugsweise vorgesehen, dass die Rechnereinheit mit Informationen über die werkzeugmaschinenbedingten Einstellrichtungen Einstellwege in den Einstellrichtungen zur Positionierung des Mittelpunkts auf der geometrischen Achse ermittelt.

Auch diese Ermittlung der Einstellwege, die vorzugsweise über die geometrische Berechnungen erfolgt, lässt sich besonders günstig mittels einer Rechnereinheit durchführen.

Noch vorteilhafter lassen sich bei dem erfindungsgemäßen Verfahren Funktionen der Werkzeugmaschine ausnützen, die in dieser vorhanden sind. So ist vorzugsweise vorgesehen, dass die Messeinheit mit der um die Drehachse drehbaren Komponente verbunden wird und dass mittels einer Zentriersteuerung die Messeinheit zur Erfassung der drei Messpunkte mittels der ersten Werkzeugmaschineneinheit durch Ansteuerung derselben um die geometrische Achse verschwenkt wird.

Das heißt, dass die ohnehin vorhandene Funktion der Werkzeugmaschine durch die erste Werkzeugmaschineneinheit mittels einer Zentriersteuerung ausgenutzt werden kann, um das Verschwenken der Messeinheit um die geometrische Achse durchzuführen.

Ferner ist vorzugsweise vorgesehen, dass in jedem Messpunkt die Lage des Messpunktes mittels der Messeinheit durch Ansteuerung und Auslesen derselben mittels der Zentriersteuerung ermittelt und insbesondere in der Rechnereinheit abgespeichert wird.

Ferner lässt sich das erfindungsgemäße Verfahren vorteilhaft dann ausführen, wenn zum Erfassen mindestens eines der Einstellwege die Messeinrichtung beim Bewegen der Werkzeugmaschineneinheiten relativ zueinander in der mindestens einen Einstellrichtung die Messeinheit mittels der Zentriersteuerung durch Ansteuerung der ersten Werkzeugmaschineneinheit in eine zu der Einstellrichtung parallele Messrichtung verschwenkt wird.

Eine weitere vorteilhafte Ausführungsform des erfindungsgemäßen Verfahrens sieht vor, dass mittels der Zentriersteuerung die Werkzeugmaschineneinheiten relativ zueinander durch Ansteuerung mindestens einer Bewegungseinheit der Werkzeugmaschineneinheiten in einer der Einstelleinrichtungen von einer ersten Erfassungsposition in eine zweite Erfassungsposition bewegt wird und dass in der zweiten Erfassungsposition in gleicher Weise wie in der ersten Erfassungsposition die Lage der Kreisbahn bestimmt und die Lage des Mittelpunkts der Kreisbahn rechnerisch ermittelt wird.

Hinsichtlich der Bestimmung der Einstellrichtung wurden bislang keine näheren Angaben gemacht.

So sieht eine bevorzugte Lösung vor, dass die Einstellrichtung durch Ermitteln der Ausrichtung einer den Mittelpunkt in der ersten Erfassungsposition und den Mittelpunkt in der zweiten Erfassungsposition schneidenden Verbindungslinie mittels der Rechnereinheit rechnerisch bestimmt wird.

Um den Mittelpunkt auf der geometrischen Achse in einfacher Weise positionieren zu können, ist vorzugsweise vorgesehen, dass die Werkzeugmaschineneinheiten ausgehend von der ersten oder zweiten Erfassungsposition in der rechnerisch bestimmten Einstellrichtung soweit über einen Einstellweg verfahren werden, dass nach Durchlaufen des Einstellwegs in der weiteren Einstellrichtung der Mittelpunkt auf der geometrischen Achse liegt.

Insbesondere wird dabei der Einstellweg in der weiteren Einstellrichtung und der Rechnereinheit unter der Voraussetzung ermittelt, dass die weitere Einstellrichtung senkrecht zur zuerst rechnerisch bestimmten Einstellrichtung verläuft.

Um in diesem Fall die Bewegung in der weiteren Einstellrichtung erfassen zu können, ist vorzugsweise vorgesehen, dass eine Messrichtung der Messeinheit durch Ansteuern der Drehung der Komponente der ersten Werkzeugmaschineneinheit durch die Zentriersteuerung parallel zu der zweiten Einstellrichtung ausgerichtet wird und der in dieser Einstellrichtung zu durchlaufende Einstellweg gemessen und insbesondere für eine Bedienungsperson angezeigt wird.

Darüber hinaus betrifft die Erfindung einer Werkzeugmaschine umfassend eine erste Werkzeugmaschineneinheit mit einer um eine mit einer geometrischen Achse zusammenfallende Drehachse drehbaren Komponente und eine zweite Werkzeugmaschineneinheit mit einer zu einem Mittelpunkt konzentrisch und auf einer Kreiszylinderfläche liegenden Kreisbahn.

Um bei einer derartigen Werkzeugmaschine in einfacher Weise die beiden Werkzeugmaschineneinheiten relativ zueinander so ausrichten zu können, dass der Mittelpunkt auf der geometrischen Achse liegt, ist vorgesehen, dass der Werkzeugmaschine eine Messeinheit zugeordnet ist, welche Positionen von auf der Kreisbahn liegenden Messpunkten relativ zu der geometrischen Achse erfasst.

Erfindungsgemäß lassen sich die von der Messeinheit erfassten Messwerte dann günstig weiterverarbeiten, wenn der Werkzeugmaschine eine Rechnereinheit zugeordnet ist und wenn die Rechnereinheit Messwerte der Messeinheit erfasst und abspeichert.

Vorzugsweise ist hierbei vorgesehen, dass die Messwerte im Rahmen einer Datenübertragung, sei sie leitungsgebunden oder nicht leitungsgebunden, der Messeinheit übermittelt werden.

Ferner ist erfindungsgemäß vorgesehen, dass die Rechnereinheit aus den Positionen von drei in definierten Winkelabständen auf der Kreisbahn liegenden Messpunkten und dem bekannten Radius der Kreisbahn die Lage des Mittelpunkts relativ zu der geometrischen Achse und einer Referenzrichtung rechnerisch ermittelt, so dass da die Ermittlung des Mittelpunkts in der Regel numerisch erfolgen muss, eine einfache Möglichkeit besteht, die jeweilige Lage des Mittelpunkts der Kreisbahn einfach zu ermitteln.

Darüber hinaus ist erfindungsgemäß vorgesehen, dass die Rechnereinheit mit Informationen über die werkzeugmaschinenbedingten Einstellrichtungen Einstellwege zur Positionierung der Mittelpunkts auf der geometrischen Achse ermittelt.

Das heißt, dass die Rechnereinheit üblicherweise bei Anwendung geometrischer Betrachtungen in der Lage ist, die Einstellwege zu ermitteln, die in den jeweiligen Einstellrichtungen erforderlich sind, um die Werkzeugmaschineneinheiten relativ zueinander so zu bewegen, dass der Mittelpunkt auf der geometrischen Achse liegt.

Die Rechnereinheit könnte grundsätzlich eine eigens für die Positionierung des Mittelpunkts auf der geometrischen Achse vorgesehene Rechnereinheit sein.

Als besonders vorteilhaft hat es sich jedoch erwiesen, wenn die Werkzeugmaschine eine Maschinensteuerung aufweist, welcher die Rechnereinheit zugeordnet ist.

Besonders vorteilhaft ist eine Werkzeugmaschine, bei welcher die Messeinheit mit der um die Drehachse drehbaren Komponente verbunden ist und bei welcher mittels einer Zentriersteuerung die Messeinheit zur Erfassung der drei Messpunkte mittels der ersten Werkzeugmaschineneinheit durch Ansteuerung derselben um die geometrische Achse verschwenkt wird, wobei dies üblicherweise in Form eines lagegeregelten Verschwenkens erfolgt, so dass die Messeinheit exakt in den jeweiligen Winkelpositionen zur Erfassung der drei Messpunkte ausgerichtet werden kann.

In diesem Fall ist vorzugsweise vorgesehen, dass in jedem Messpunkt die Lage des Messpunktes mittels der Messeinheit durch Ansteuern und Auslesen mittels der Zentriersteuerung ermittelt und in der Rechnereinheit abgespeichert wird.

Ferner ist bei einer erfindungsgemäßen Werkzeugmaschine vorzugsweise vorgesehen, dass die Zentriersteuerung zum Erfassen von mindestens einem der Einstellwege beim Bewegen der Werkzeugmaschineneinheiten relativ zueinander in der mindestens einen Einstellrichtung die Messeinheit durch Ansteuerung der ersten Werkzeugmaschine in eine zu der Einstellrichtung parallele Messrichtung verschwenkt.

Damit besteht die Möglichkeit, bei einer der Zentriersteuerung bekannten Ausrichtung der Einstellrichtung die Messeinheit so auszurichten, dass mittels dieser der zu durchlaufende Einstellweg überprüft werden kann und somit überprüft werden kann, ob der ermittelte Einstellweg in dieser Einstellrichtung auch tatsächlich durchlaufen wird.

Eine weitere vorteilhafte Ausführungsform der Werkzeugmaschine sieht vor, dass die Zentriersteuerung nach Ermittlung der Lage des Mittelpunkts der Kreisbahn durch die Rechnereinheit in einer ersten Erfassungsposition die Werkzeugmaschineneinheiten relativ zueinander durch Ansteuerung einer Bewegungseinheit der Werkzeugmaschinen in einer der Einstellrichtungen von der ersten Erfassungsposition in die zweite Erfassungsposition bewegt und dass die Rechnereinheit in der zweiten Erfassungsposition in gleicher Weise wie in der ersten Erfassungsposition die Lage der Kreisbahn bestimmt und die Lage des Mittelpunkts der Kreisbahn rechnerisch ermittelt.

Diese Art der Ermittlung der Mittelpunkte der Kreisbahn in zwei verschiedenen Erfassungspositionen erlaubt es, seitens der Rechnereinheit die Ausrichtung der Einstellrichtung ebenfalls zu erfassen.

Hierzu ist vorzugsweise vorgesehen, dass die Rechnereinheit die Einstellrichtung durch Ermittlung der Ausrichtung einer den ersten Mittelpunkt in der ersten Erfassungsposition und den Mittelpunkt in der zweiten Erfassungsposition schneidenden Verbindungslinie rechnerisch bestimmt, wobei die Lage und Ausrichtung der Verbindungslinie dann die Lage und Ausrichtung der zu ermittelnden Einstellrichtung angibt.

In diesem Fall lässt sich dann die Zentriersteuerung so einsetzen, dass diese die Werkzeugmaschineneinheiten ausgehend von der ersten oder zweiten Erfassungsposition in der bestimmten Einstellrichtung soweit über einen Einstellweg verfährt, dass nach Durchlaufen des Einstellwegs in der weiteren Einstellrichtung der Mittelpunkt auf der geometrischen Achse liegt. Insbesondere ist bei einer der voranstehend beschriebenen Ausführungsformen der erfindungsgemäßen Werkzeugmaschine vorgesehen, dass diese nach einer Ausführungsform der eingangs beschriebenen Verfahren arbeitet. Weitere Merkmale und Vorteile sind Gegenstand der nachfolgenden Beschreibung sowie der zeichnerischen Darstellung einiger Ausführungsbeispiele.

In der Zeichnung zeigen:

Fig. 1   eine schematische perspektivische Darstellung eines ersten Ausführungsbeispiels einer Werkzeugmaschine;

Fig. 2   eine Draufsicht in Richtung des Pfeils A auf einen Werkzeugträger und eine an diesem gehaltene Werkzeughalterbasis eines Werkzeughalters;

Fig. 3   eine schematische Darstellung eine durch eine zylindrische Fläche einer Pinole des Werkzeughalters definierte Kreisbahn K in ihrer unbestimmten Lage relativ zur geometrischen Achse und einer um die geometrische Achse verlaufenden Referenzkreisbahn;

Fig. 4   eine Darstellung ähnlich Fig. 3 mit zusätzlicher Darstellung einer Messeinheit, die mittels eines Halters um die geometrische Achse schwenkbar angeordnet ist und die Ausrichtung der Messeinheit 64 parallel zur X-Achse;

Fig. 5   eine Bestimmung der Positionen von drei Messpunkten auf der Kreisbahn durch Verschwenken der Messeinheit in drei Messebenen und Ausmessen der Positionen in den jeweiligen Messebenen;

Fig. 6   eine Darstellung der Kreisbahn, der Referenzkreisbahn, der gemessenen Positionen der Messpunkte mit schematischer Darstellung der sich durch die rechnerische Ermittlung ergebenden Parametern für die Ermittlung des Mittelpunktes der Kreisbahn, wie sie sich aus den in der Beschreibung genannten Formeln ergeben, wobei die Lage des Mittelpunkts nicht mit der in Fig. 5 und Fig. 7 übereinstimmt.

Fig. 7   eine realistische Darstellung der Lage des Mittelpunkts, wie sie sich rechnerisch aus den gemäß Fig. 5 bestimmten Positionen ergibt;

Fig. 8   eine Darstellung der geometrischen Verhältnisse bei bekannter Lage des Mittelpunkts relativ zur geometrischen Achse und zu den Messebenen bei der Bestimmung der Positionen der Messpunkte sowie der sich daraus durch einfache geometrische Betrachtung ermittelnden Einstellwege dx und dy;

Fig. 9    eine Darstellung der zentrierten Position des Mittelpunkts auf der geometrischen Achse und der Lage der Kreisbahn sowie der Referenzkreisbahn in diesem Fall zueinander.

Fig. 10    eine schematische Darstellung eines zweiten Ausführungsbeispiels einer erfindungsgemäßen Drehmaschine mit einer Maschinensteuerung und einer Zentriersteuerung;

Fig. 11    eine schematische Darstellung der durch die kreiszylindrische Fläche der Pinole sich ergebenden Lage der abtastbaren Kreisbahn bei unzentrierter Anordnung der Pinole relativ zur geometrischen Achse ähnlich Fig. 3;

Fig. 12    eine Darstellung der Bestimmung der Positionen der drei Messpunkte in den drei Messebenen ähnlich Fig. 5;

Fig. 13    eine Darstellung der sich aus den Positionen der Messpunkte ergebenden Parameter für die Lage des Mittelpunkts in einer ersten Erfassungsposition;

Fig. 14    eine Lage der Kreisbahn nach Verschieben derselben von der ersten Erfassungsposition, dargestellt in den Fig. 11 bis 13 in eine zweite Erfassungsposition;

Fig. 15    eine Darstellung der Bestimmung der Positionen der Messpunkte in den Messebenen entsprechend Fig. 12 bei in der zweiten Erfassungsposition stehender Kreisbahn;

Fig. 16    eine Darstellung der aus den Messpositionen ergebenden Parameter für die Lage des Mittelpunkts in der zweiten Erfassungsposition;

Fig. 17    eine schematische Darstellung einer Ermittlung einer durch die beiden Mittelpunkte in den beiden Erfassungspositionen verlaufenden Verbindungslinie V und die daraus folgende rechnerische Ermittlung der Einstellwege durch einfache geometrische Beziehungen zwischen den Lagen der Mittelpunkte in den beiden Einstellpositionen und dem Verlauf der Verbindungslinie V;

Fig. 18    eine nochmals vergrößerte Darstellung der Verhältnisse und der Ausrichtung einer Messebene zur Ermittlung und zum Erfassen eines Einstellwegs in einer Y-Richtung und

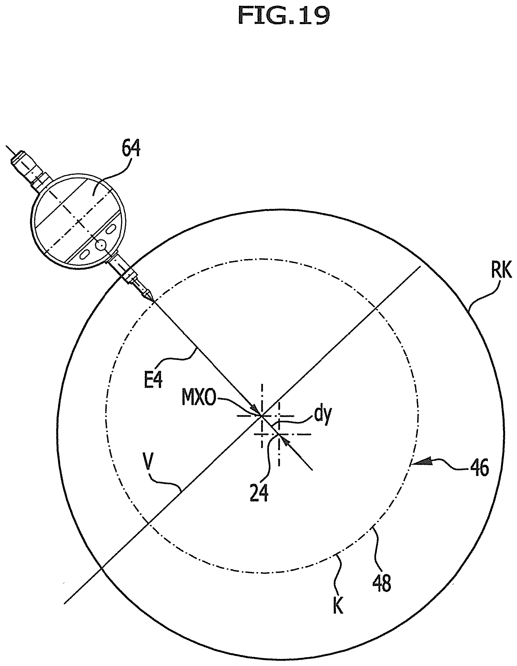

Fig. 19    eine Darstellung der Ausrichtung der Messeinheit in der Messebene zur Ermittlung der Verschiebung des Mittelpunkts der Kreisbahn in der Y-Richtung.

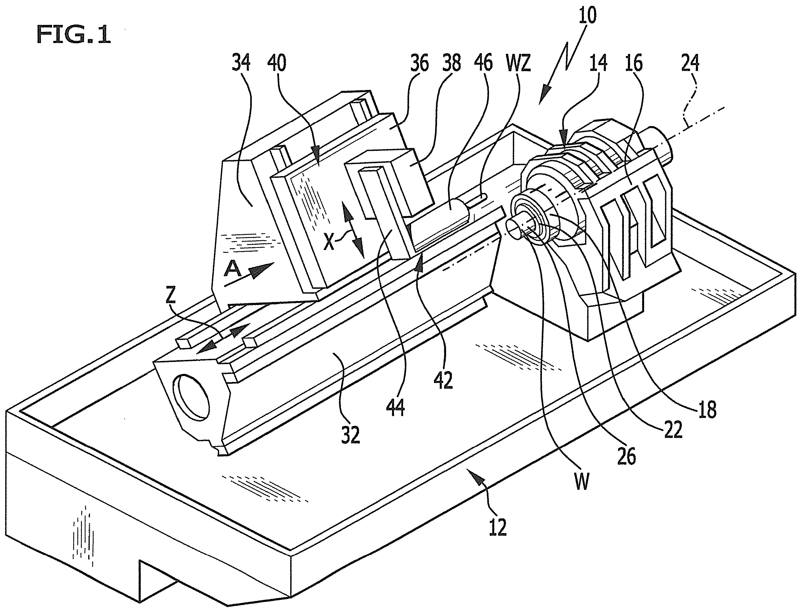

Ein in Fig. 1 dargestelltes Ausführungsbeispiel einer erfindungsgemäßen Werkzeugmaschine 10 umfasst ein als Ganzes mit 12 bezeichnetes Maschinengestell, an welchem eine Werkstückspindeleinheit 14 angeordnet ist, wobei die Werkstückspindeleinheit 14 beispielsweise eine in einem Spindelgehäuse 16 angeordnete Motorspindel 18 umfasst, mittels welcher ein Spindelrohr 22 um eine Spindelachse 24 drehbar ist, wobei das Spindelrohr 22 eine Werkstückaufnahme 26, beispielsweise ein Spannfutter, zum Fixieren eines Werkstücks W umfasst, das dadurch ebenfalls um die Spindelachse 24 drehbar ist.

Zur Bearbeitung des Werkstücks W ist an dem Maschinengestell 12 ein Maschinenbett 32 angeordnet, an welchem ein erster Schlittenkörper 34 in einer zur Spindelachse 24 parallelen Z-Richtung bewegbar gelagert ist, wobei an dem ersten Schlittenkörper 34 ein zweiter Schlittenkörper 36 in einer senkrecht zur Z-Richtung verlaufenden X-Richtung, die somit auch senkrecht zur Spindelachse 24 verläuft, geführt ist. Die Schlitterkörper 34 und 36 bilden zusammen einen Kreuzschlitten 40.

An dem zweiten Schlittenkörper 36 ist ein Werkzeugträger 38 angeordnet, an welchem beispielsweise ein als Ganzes mit 42 bezeichneter Werkzeughalter angeordnet ist, der eine an dem Werkzeugträger 38 montierte Werkzeughalterbasis 44 sowie beispielsweise eine Pinole 46 aufweist, in welcher ein Werkzeug WZ, beispielsweise ein Bohrer, angeordnet ist.

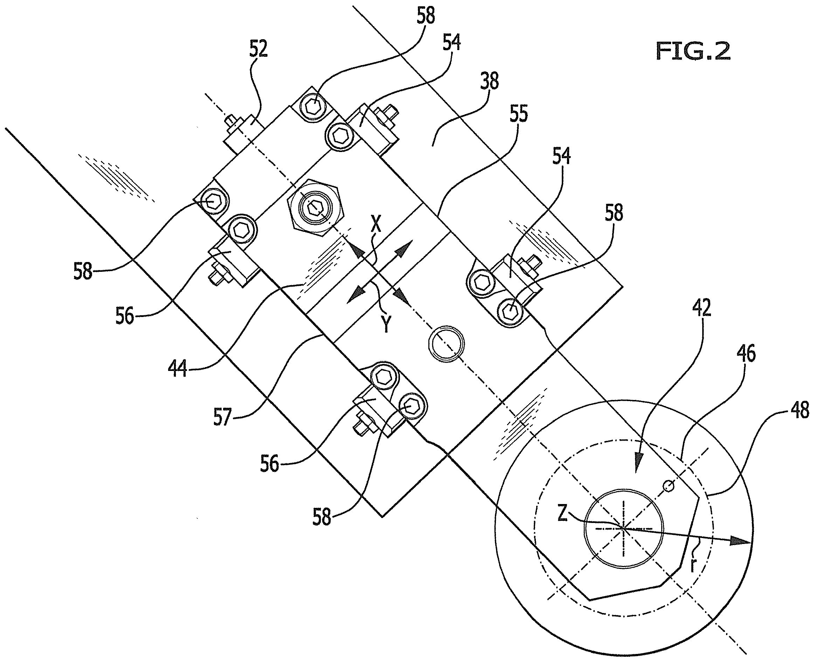

Wie in Fig. 2 dargestellt, ist die Werkzeughalterbasis 44 des Werkzeughalters 42 relativ zum Werkzeugträger 38 durch eine Verstelleinheit 52 in einer zur X-Achse parallelen Einstellrichtung verstellbar und durch beidseits der Werkzeughalterbasis 44 angeordnete Verstelleinheiten 54 beziehungsweise 56, die die Werkzeughalterbasis 44 beim Verstellen in X-Richtung mittels der Verstelleinheit 52 im Bereich ihrer Längsseiten 55 beziehungsweise 57 in X-Richtung führen, quer zur X-Achse, das heißt in Richtung zur Y-Achse parallelen Einstellrichtung, verschiebbar, wobei die Werkzeughalterbasis 44 durch Schrauben 58 an dem Werkzeugträger 38 in der jeweiligen Stellung fixierbar ist, so dass nach Lösen der Schrauben 58 mittels der Verstelleinheiten 52 sowie 54 und 56 ein Verschieben der Werkzeughalterbasis 44 relativ zum Werkzeugträger 38 in der jeweiligen Einstellrichtung möglich ist.

Bei derartigen Werkzeughaltern 42 ist das Werkzeug WZ beispielsweise konzentrisch zu der Pinole 46 montiert und die Pinole 46 umfasst eine kreiszylindrische Fläche 48, insbesondere eine kreiszylindrische Umfangsfläche, deren Radius r ausgehend von ihrer Zylinderachse Z bekannt ist.

Bei der Montage eines derartigen Werkzeughalters 42 an dem Werkzeugträger 38 besteht das Problem, für eine exakte zentrische Bearbeitung des Werkstücks W die Pinole 46 mit dem in dieser beispielsweise konzentrisch montierten Werkzeug WZ so anzuordnen, dass die Zylinderachse Z der Pinole 46 in einer definierten Stellung des Werkzeugträgers 38 mit der Spindelachse 24 zusammenfällt.

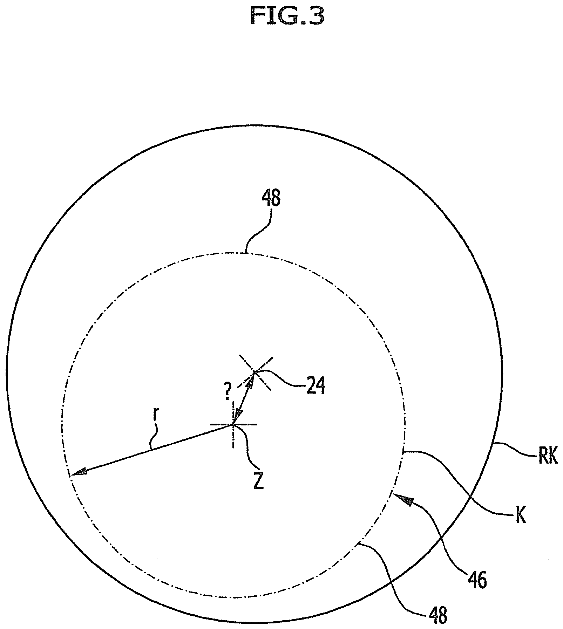

Üblicherweise liegt, wie in Fig. 3 dargestellt, bei der Montage des Werkzeughalters 42 die beispielsweise in Fig. 3 dargestellte Situation vor, dass die Zylinderachse Z der kreiszylindrischen Fläche 48 der Pinole 46 in einem undefinierten Abstand und in einer undefinierten Richtung beabstandet von der Spindelachse 24, insbesondere jedoch parallel zu dieser, angeordnet ist.

Aus diesem Grund besteht die Notwendigkeit, die Pinole 46 so zu verschieben, dass die Zylinderachse Z, welche einen Mittelpunkt der kreiszylindrischen Fläche 48 definiert so zu verschieben, dass diese mit der Spindelachse 24 zusammenfällt.

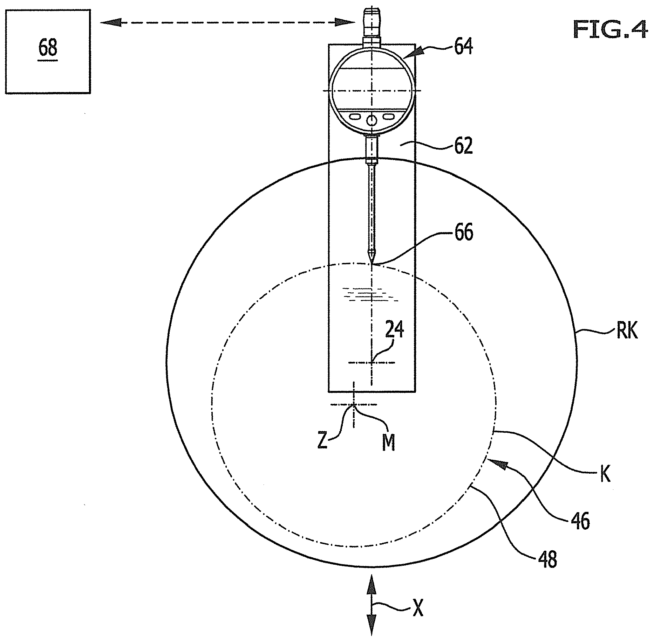

Hierzu wird bei einem ersten Ausführungsbeispiel des erfindungsgemäßen Verfahrens in der Werkstückaufnahme 26 des Spindelrohrs 22, wie in Fig. 4 dargestellt, ein Halter 62 montiert, der mittels des um die Spindelachse 26 drehbaren Spindelrohrs 22 um die Spindelachse 24 drehbar ist und eine Messeinheit 64 trägt, welche eine Tastspitze 66 aufweist, mit welcher in radialer Richtung zur Spindelachse 24, welche gleichzeitig eine geometrische Achse für die Ausrichtung der Pinole 46 darstellt, Positionen erfasst werden können.

Dabei vermisst die Tastspitze 66, beispielsweise ausgehend von einer Referenzkreisbahn RK um die Spindelachse 24 mit einem Referenzradius R, die Lage einer auf der kreiszylindrischen Fläche 48 liegenden und durch einen Schnitt dieser kreiszylindrischen Fläche 48 mit einer senkrecht zur geometrischen Achse 24 verlaufenden Ebene KE festgelegten Kreisbahn K durch Bestimmung eines bezogen auf die Spindelachse 24 radialen Abstandes von der Referenzkreisbahn RK.

Zur Bestimmung der Lage der Pinole 46 relativ zur Spindelachse 24 erfolgt ein Abtasten der kreiszylindrischen Fläche 48 durch Bewegen der Tastspitze 66 längs der Kreisbahn K, um deren Lage relativ zur Spindelachse 24 zu erfassen und um aus der Lage der Kreisbahn K auf der kreiszylindrischen Fläche 48 die Lage eines auf deren Zylinderachse Z in der Ebene KE liegenden Mittelpunkts M der auf der Zylinderfläche 48 durch die Tastspitze 66 der Messeinheit 64 erfassten Kreisbahn K zu ermitteln.

Zur Vereinfachung der Bestimmung der auf der Lage der kreiszylindrischen Fläche 48 mittels der Tastspitze 66 abgefahrenen Kreisbahn K erfolgt, wie in Fig. 4 dargestellt, ein beispielsweise manuelles Drehen der Ausrichtung der Messeinheit 64 um die Spindelachse 24 so lange bis die Tastspitze 66 in einer ersten Messebene E1 zum Messen des Abstandes der Kreisbahn K von der Referenzkreisbahn RK in einer radialen Richtung zur geometrischen Achse 24 bewegbar ist, die beispielsweise parallel zur X-Achse ausgerichtet ist und durch die geometrische Achse 24 hindurch verläuft.

Bei einer manuellen Bestimmung erfolgt die Ermittlung der zur X-Achse parallelen Ausrichtung dadurch, dass beispielsweise eine der durch die Verstelleinheiten 54, 56 beaufschlagten Seitenkanten 55 beziehungsweise 57 der Werkzeughalterbasis 44 als Referenzrichtung herangezogen wird und zur Ausrichtung der Messeinheit 64 durch Schattenprojektion in Richtung der Tastspitze 66 projiziert wird.

In der damit zur X-Achse parallel ausgerichteten Messebene E1 erfolgt dann durch Abtasten der kreiszylindrischen Fläche 48 mittels der Tastspitze 66 im Messpunkt P1 die Bestimmung des Abstandes m1 in einer durch den Messpunkt P1 und radial zur geometrischen Achse 24 verlaufenden Messrichtung MR1 von der Referenzkreisbahn RK.

Danach erfolgt ein beispielsweise manuelles Verschwenken der Messvorrichtung 64 um die Spindelachse 24 um 90°, so dass die Tastspitze 66 in einer zweiten Messebene E2, die durch die geometrische Achse 24 hindurch verläuft, liegt und in einer durch den Messpunkt P2 und radial zur geometrischen Achse 24 verlaufenden Messrichtung MR2 zum Messen bewegbar ist, und in diesem Fall erfolgt im Messpunkt P2 mit der Tastspitze 66 eine Bestimmung des Abstandes m2 des Messpunkts P2 von der Referenzkreisbahn RK.

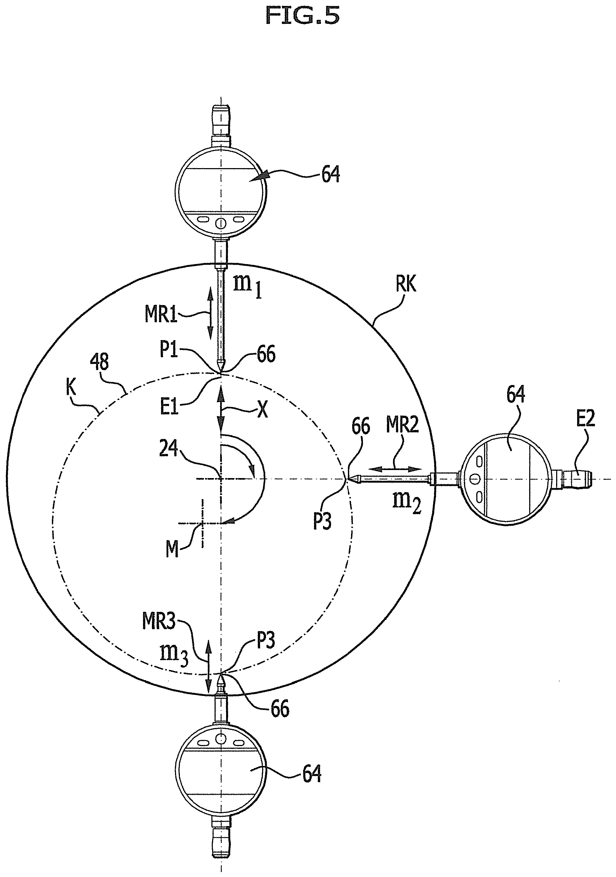

Schließlich folgt ein beispielsweise manuelles Verschwenken der Messvorrichtung 64 um 180° relativ zum Referenzpunkt P1 und zur Messebene E1, so dass die Tastspitze 66 in einer dritten Messebene E3, die durch die geometrische Achse 24 hindurch verläuft, liegt und in dieser zum Messen in einer durch einen Messpunkt P3 und radial zur geometrischen Achse 24 verlaufenden Messrichtung MR3 bewegbar ist, so dass in dem Messpunkt P3, welcher bezüglich der Spindelachse 24 dem Messpunkt P1 exakt gegenüberliegt, der Abstand m3 von der Referenzkreisbahn RK mittels der Tastspitze 66 erfasst wird (Fig. 5).

Die von der Messeinheit 64 erfassten Abstände m1, m2, m3 werden beispielsweise einer der Werkzeugmaschine 10 zugeordneten Rechnereinheit 68 übermittelt und von dieser korreliert mit den Messrichtungen MR1, MR2, und MR3 abgespeichert (Fig. 4).

Unter Heranziehen der jeweils in radialer Richtung zur Spindelachse 24 gemessenen Abstände m1, m2 und m3 der Messpunkte P1, P2 und P3 von der Referenzkreisbahn RK und des bekannten Radius r der Kreisbahn K lassen sich anhand der folgenden drei Gleichungen

$$(xM)^2 + (r + xM + A - m_1)^2 - 2xM\,(r + xM + A - m_1)\,\cos a = r^2$$

$$(xM)^2 + (r + xM + A - m_2)^2 + 2xM\,(r + xM + A - m_2)\,\sin a = r^2$$

$$(xM)^2 + (r + xM + A - m_3)^2 + 2xM\,(r + xM + A - m_3)\,\cos a = r^2,$$

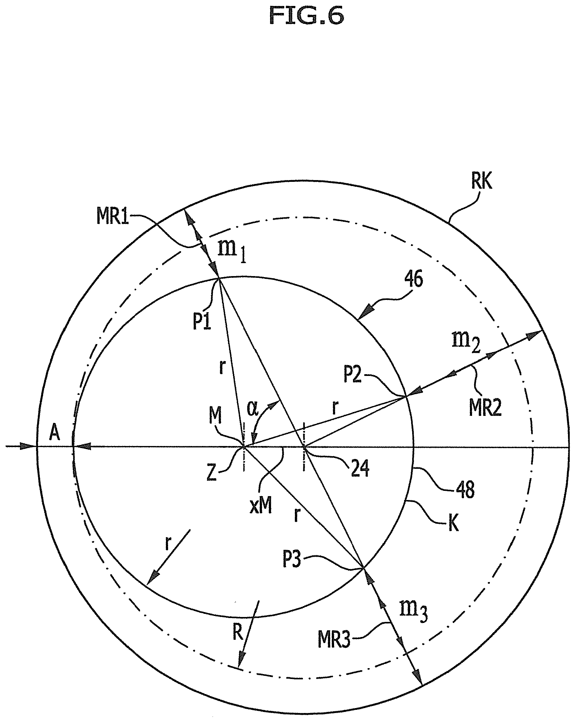

deren Größen nochmals in Fig. 6 im Zusammenhang mit der kreiszylindrischen Fläche 48 der Pinole 46 der abgetasteten Kreisbahn K und der Referenzkreisbahn RK sowie dem Radius r der kreiszylindrischen Fläche 48 vermerkt sind, die Größen xM, a und A bestimmen, wobei beispielsweise die Größe A bei der nachfolgend beschriebenen Vorgehensweise nicht unmittelbar relevant ist, sondern nur die Größen xM und a weiter verwendet werden.

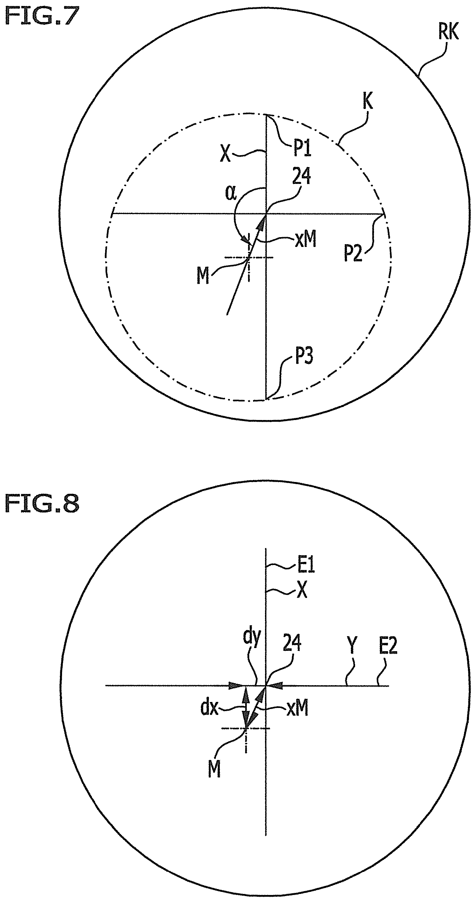

Die Lösung der drei Gleichungen erfolgt beispielsweise mittels der Rechnereinheit 68 durch ein numerisches Verfahren die Lage des Mittelpunkts M der abgetasteten Kreisbahn K in Bezug auf die die geometrische Achse darstellende Spindelachse 24 berechnen, wobei die Lage des Mittelpunkts M einerseits durch den Abstand xM des Mittelpunkts M von der geometrischen Achse 24 und andererseits durch den Winkel a zwischen der Messebene E1 oder Verbindungslinie der Messpunkte P1 und P3 und der Verbindungslinie zwischen der geometrischen Achse und dem Mittelpunkt M, angegeben ist, wie in Fig. 7 dargestellt.

Ausgehend von diesen Angaben zur Lage des zum Mittelpunkts M der von der Tastspitze 66 abgetasteten Kreisbahn K auf der kreiszylindrischen Fläche 48 relativ zur geometrischen Achse 24 lässt sich nun beispielsweise mittels der Rechnereinheit 64 mit einfachen geometrischen Berechnungen der in Fig. 8 dargestellten Verhältnisse der Einstellweg dx rechnerisch ermitteln, um welchen eine Verschiebung des Mittelpunkts M in X-Richtung erforderlich ist, damit dieser später mit der geometrischen Achse 24 zusammenfällt.

Ferner lässt sich ausgehend von der Prämisse, dass die Y-Richtung senkrecht zur X-Richtung verläuft und die geometrische Achse 24 schneidet, auch ein Einstellweg dy rechnerisch ermitteln, um welchen eine Verschiebung des Mittelpunkts M der abgetasteten Kreisbahn K auf der kreiszylindrischen Fläche 48 erfolgen muss, um zu erreichen, dass der Mittelpunkt M auf der geometrischen Achse 24 liegt (Fig. 8).

Zur Relativbewegung der Werkzeugmaschineneinheiten 14, 46 entsprechend den Einstellwegen dx und dy wird wiederum die Messeinheit 64 um die Spindelachse 24 und somit um die geometrische Achse verschwenkt, bis diese wieder in der Messebene E1 steht, die - wie voranstehend ausgeführt - so ausgerichtet wurde, dass diese parallel zur X-Achse verläuft.

In dieser Position der Messeinheit 64 lässt sich nun mit der Tastspitze 66 der Einstellweg dx erfassen, um welchen die Werkzeughalterbasis 44 beim Betätigen der Einstellvorrichtung 52 in X-Richtung relativ zu der Ausgangsposition zu bewegen ist, wobei dieses Bewegen der Werkzeughalterbasis 44 in X-Richtung nach Lösen der Schrauben 58 erfolgt, bis der Wert dx erreicht wird.

Nachfolgend erfolgt ein Verschwenken der Messeinheit 64 um 90° so, dass die Tastspitze 66 in der Messebene E2 liegt, die um 90° gegenüber der Messebene E1 um die geometrische Achse 24 verschwenkt ist.

Mit dieser in der Messebene E2 stehenden Messeinheit 64 lässt sich dann die Verschiebung des Mittelpunkts M um den Einstellweg dy in der Y-Richtung überwachen, die durch Betätigen der Einstellvorrichtungen 54 und 56 nach Lösen der Schrauben 58 erfolgt.

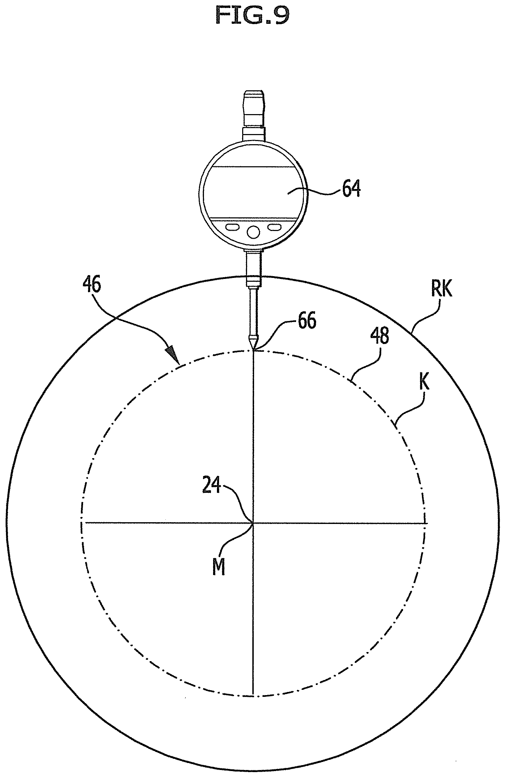

Wird die Verschiebung des Mittelpunkts M der Pinole 46 korrekt durchgeführt, so liegt, wie in Fig. 9 dargestellt, der Mittelpunkt M schließlich auf der geometrischen Achse 24, was sich beispielsweise durch die Messeinheit 64 noch überprüfen lässt, denn in diesem Fall muss die Tastspitze 66 der Messeinheit 64 in allen Drehstellungen um die geometrische Achse 24 denselben Wert m als Abstand von der Referenzkreisbahn RK messen.

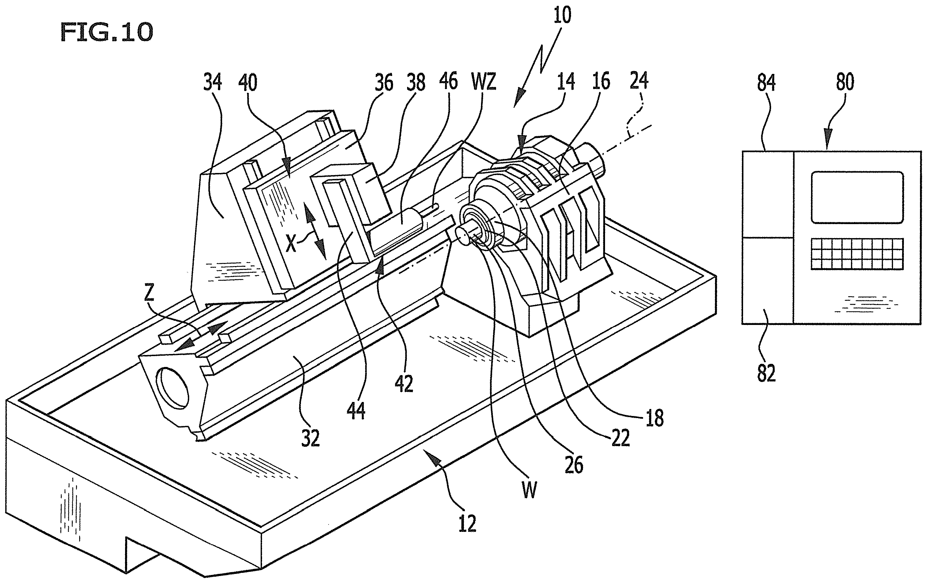

Bei einem zweiten Ausführungsbeispiel des erfindungsgemäßen Verfahrens wird zu der Werkzeugmaschine 10 auch noch eine dieser zugeordnete Steuerung 80 eingesetzt, die in üblicher Weise die Werkzeugspindeleinheit 14 steuert, wobei eine Ansteuerung der Motorspindel 18 sowohl hinsichtlich ihrer Drehzahl als auch als C-Achse, das heißt drehlagegeregelt, erfolgt (Fig. 10).

Des Weiteren erfolgt durch die Maschinensteuerung 80 eine Ansteuerung des Kreuzschlittens 40 zur Positionierung des Werkzeugträgers 38 relativ zu dem Werkstück W, beispielsweise sowohl in der Z-Richtung als auch in der X-Richtung.

Die Zentriersteuerung 82 ist entweder drahtlos oder drahtgebunden mit der Messeinheit 64 verbunden, um aus dieser, wie nachfolgend im Detail erläutert, die jeweils zu bestimmenden Messwerte m1, m2 und m3 auszulesen und einer Rechnereinheit 84 zu übergeben und andererseits mit der Maschinensteuerung 80 gekoppelt, um über die Maschinensteuerung 80 die Werkstückspindeleinheit 14 als C-Achse zu betreiben und somit die Messeinheit 64 um die die geometrische Achse darstellende Spindelachse 24 zu verschwenken, so dass dadurch die Möglichkeit besteht, gesteuert durch die Zentriersteuerung 82, ohne manuelle Einwirkung in den Messpunkten P1, P2 und P3 deren Abstände m1, m2 und m3 durch die Tastspitze 66 der Messeinheit 64 von der zur Referenzkreisbahn RK zu bestimmen, wie im Zusammenhang mit dem ersten Ausführungsbeispiel ein Detail erläutert.

Zur Durchführung des zweiten Ausführungsbeispiels des erfindungsgemäßen Verfahrens werden mittels der Zentriersteuerung 82 die nachfolgend erläuterten Verfahrensschritte durchgeführt.

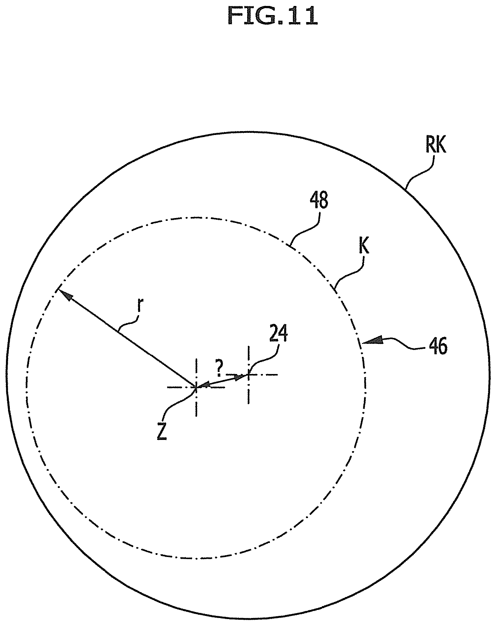

Wie in Fig. 11 dargestellt, ist in gleicher Weise, wie in Fig. 3 dargestellt, der Abstand der Zylinderachse Z der Pinole 46 von der die geometrische Achse darstellenden Spindelachse 24 unbekannt, so dass dieser Abstand ermittelt werden muss.

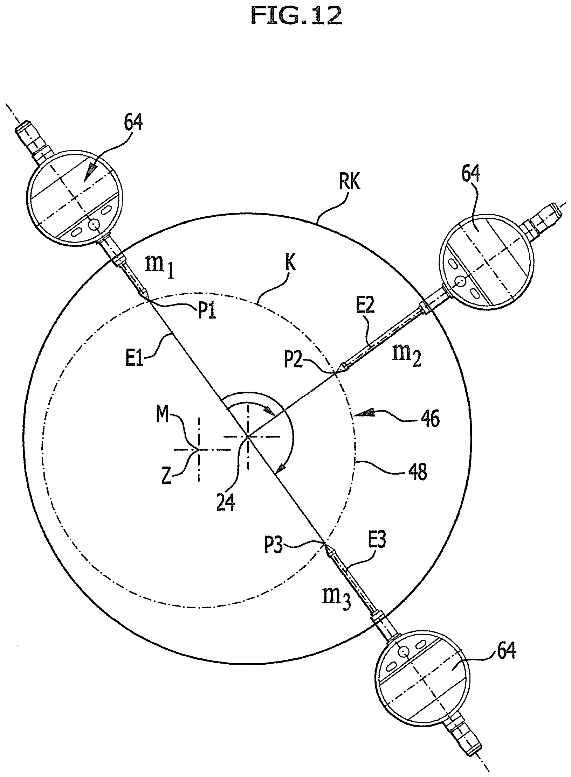

Hierzu erfolgt ähnlich wie beim ersten Ausführungsbeispiel des erfindungsgemäßen Verfahrens ein Abtasten der kreiszylindrischen Fläche 48 der Pinole 46 längs der Kreisbahn K mittels der ebenfalls durch den Halter 62 in der Werkstückaufnahme 26, beispielsweise dem Spannfutter, gehaltenen Messeinheit 64, wobei nunmehr bei dem zweiten Ausführungsbeispiel das Verschwenken der Messeinheit 64 um die die geometrische Achse darstellende Spindelachse 24 gesteuert von der Zentriersteuerung 82 durch Ansteuerung der Werkstückspindeleinheit 14 als C-Achse über die Maschinensteuerung 80 erfolgt (Fig. 12).

Darüber hinaus ist, im Gegensatz zum ersten Ausführungsbeispiel, wie in Fig. 12 dargestellt, die Lage der Messebene E1 nicht mit der X-Achse korreliert, sondern die Lage der ersten Messebene E1 wird durch die Maschinensteuerung 80 willkürlich gewählt.

Somit ist auch die Wahl der Lage des ersten Messpunkts P1 willkürlich. In der ersten Messebene E1 wird in gleicher Weise wie im Zusammenhang mit dem ersten Ausführungsbeispiel beschrieben, nunmehr gesteuert von der Zentriersteuerung 82 in der Messrichtung MR1 ausgehend von dem Referenzkreisbahn RK der Abstand m1 des Messpunkts P1 mittels der Messeinheit 64 bestimmt und der Rechnereinheit 84 übergeben.

Danach erfolgt durch die als C-Achse betriebene Werkstückspindeleinheit 14 gesteuert durch die Zentriersteuerung 82 mittels der Maschinensteuerung 80 ein Verschwenken der Messeinheit 64 ausgehend von der Messebene E1 in die Messebene E2, die in einem Winkel von 90° zur Messebene E1 verläuft und im Messpunkt P2 in der Messrichtung MR2 ein Ermitteln des Abstands P2 von dem Referenzkreisbahn RK in radialer Richtung zur die geometrische Achse darstellenden Spindelachse 24, wobei der Abstand m2 bestimmt wird und der Rechnereinheit 84 übergeben wird.

Schließlich erfolgt durch die Zentriersteuerung 82 ein Verschwenken der Messeinheit 64 in die Messebene E3 zur Bestimmung des Abstandes m3 des Messpunkts P3 von der Referenzkreisbahn RK in der Messrichtung MR3.

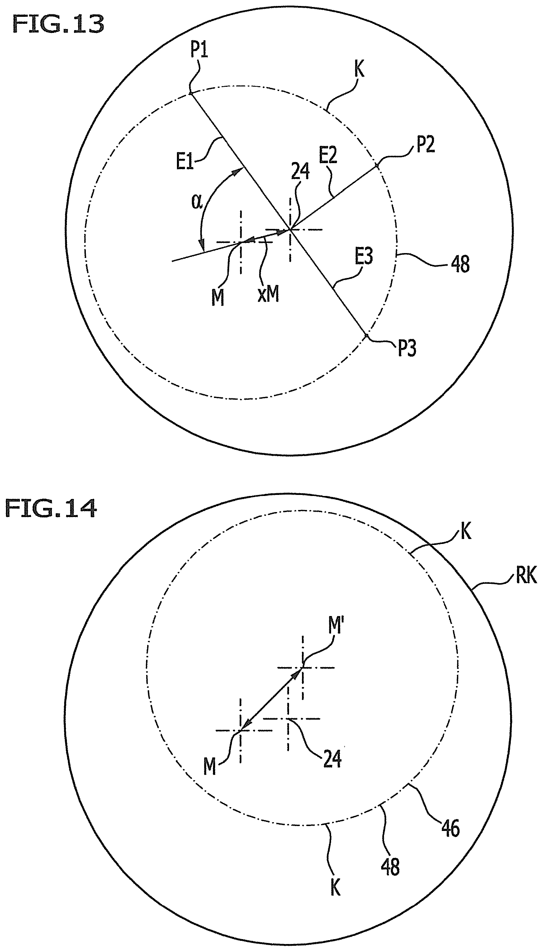

Mit diesen Werten für die Abstände m1, m2 und m3 und der bereits im Zusammenhang mit der im ersten Ausführungsbeispiel genannten Formel lässt sich die Lage des Mittelpunkts M der Kreisbahn K relativ zur ersten Messebene E1 durch Ermitteln des Abstandes xM des Mittelpunkts M von der geometrischen Achse 24 und des Winkels a zwischen der Messebene E1 und der Verbindungslinie zwischen dem Mittelpunkt M und der geometrischen Achse 24 mittels der Rechnereinheit 84 bestimmen, wie dies in Fig. 13 dargestellt ist.

Da bei dem zweiten Ausführungsbeispiel des erfindungsgemäßen Verfahrens die relative Lage der X-Achse zu den Messebenen E1, E2 und E3 nicht bekannt ist, ist es erforderlich, die durch die Werkzeugmaschine, insbesondere den Kreuzschlitten 40, vorgegebene X-Achse zu bestimmen.

Aus diesem Grund wird durch die Zentriersteuerung 82 mittels der Maschinensteuerung 80 der Kreuzschlitten 40 so angesteuert, dass dieser den Werkzeughalter 42 ausgehend von der ersten Erfassungsposition, in welcher der Mittelpunkt M der Kreisbahn K bereits bestimmt wurde, beispielsweise in Richtung der X-Achse in eine zweite Erfassungsposition verschoben wird, wie dies in Fig. 14 dargestellt ist.

In Fig. 14 sind der in der ersten Erfassungsposition bestimmte Mittelpunkt M und der Mittelpunkt M' in der zweiten Erfassungsposition dargestellt, dessen Lage jedoch noch nicht bestimmt wurde.

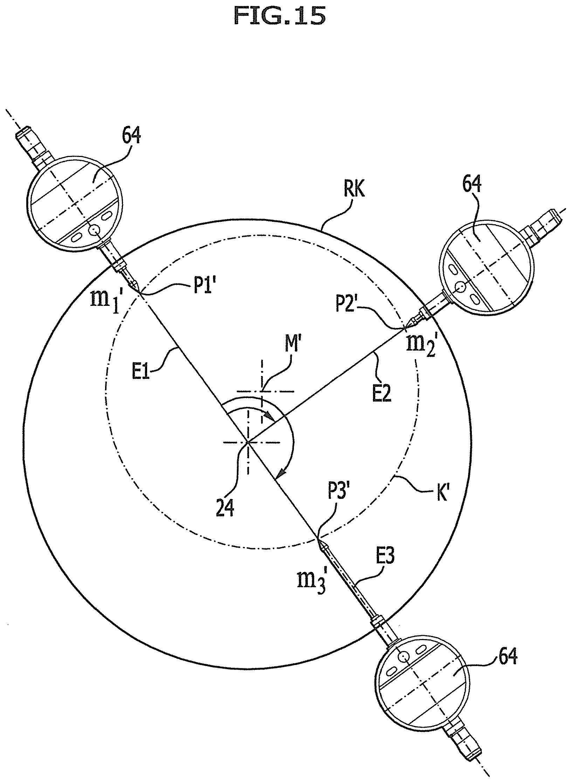

In dieser zweiten Erfassungsposition der Pinole 46 und somit der Kreisbahn K' auf der kreiszylindrischen Fläche 48 erfolgt nun, wie in Fig. 15 dargestellt, ebenfalls die Erfassung der Lage der Kreisbahn K' relativ zur Referenzkreisbahn RK durch Bestimmen der Lage von drei Messpunkten P1', P2' und P3', jeweils erfasst in den Erfassungsebenen E1, E2 und E3, die beispielsweise mit denen in der ersten Erfassungsposition identisch sind (Fig. 15).

Dabei wird jeweils zu den Messpunkten P1', P2', P3' in den Messrichtungen MR1, MR2, MR3 der sich in radialer Richtung zur die geometrische Achse 24 ergebende Abstand m1', m2' und m3' des ersten Messpunkts P1' des zweiten Messpunkts P2' und des dritten Messpunkts P3' von der Referenzkreisbahn RK, gesteuert durch die Zentriersteuerung 82, in gleicher Weise wie vorstehend beschrieben durch Verschwenken der Messeinheit 64 mittels der als C-Achse betriebenen Werkstückspindeleinheit 14 ermittelt (Fig. 15).

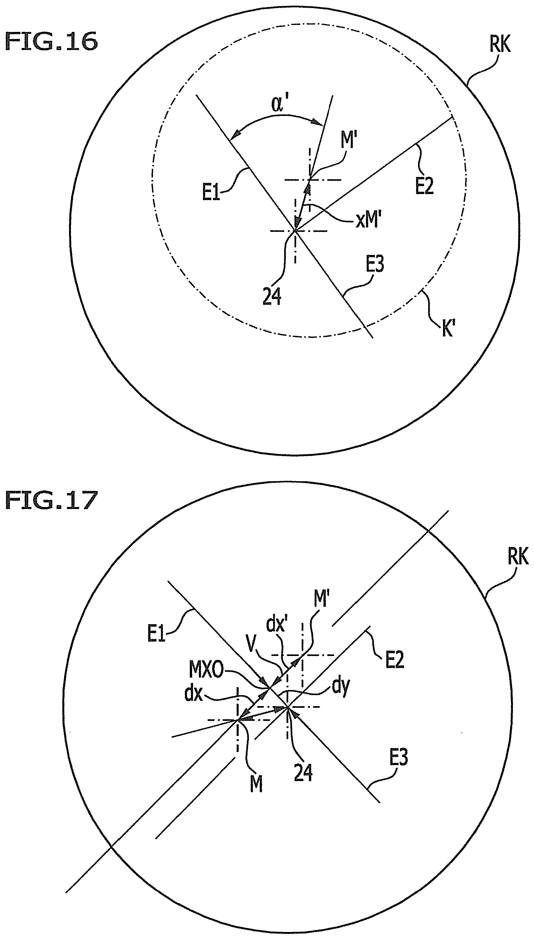

Mit diesen Werten für die Abstände m1', m2' und m3' lässt sich wiederum mittels der Rechnereinheit 84 die Lage des Mittelpunkts M' der Kreisbahn K' durch Festlegen des Abstandes des Mittelpunkts M' von der geometrischen Achse 24 gegeben durch den Wert xM' und des Winkels a' zwischen der Verbindungslinie zwischen der geometrischen Achse 24 und dem Mittelpunkt M' und der Messebene E1 durch die Zentriersteuerung 82 ermitteln, wie in Fig. 16 dargestellt.

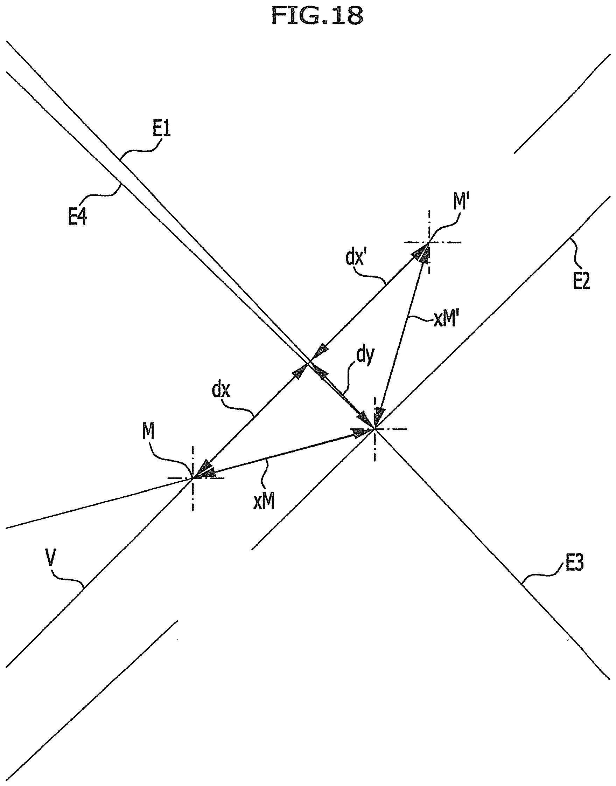

Wie in Fig. 17 und 18 vergrößert dargestellt, ist somit der Rechnereinheit 84 sowohl die Lage des Messpunkts M als auch die Lage des Messpunkts M' relativ zu den Messebenen E1, E2 und E3 bekannt.

Dabei verläuft eine durch die Bewegung in der X-Richtung vorgegebene Verbindungslinie V zwischen den Mittelpunkten M und M' in beliebiger Orientierung zu den Messebenen E1, E2 und E3, da deren Lage unkorreliert zur X-Achse gewählt wurde.

Durch Bestimmen der Lage und Ausrichtung Verbindungslinie V hat die Rechnereinheit 84 jedoch die Möglichkeit, die Ausrichtung und Lage der X-Achse relativ zu der geometrischen Achse 24 zu bestimmen und damit auch zu bestimmen, um welchen Einstellweg dx ausgehend von der ersten Erfassungsposition der Mittelpunkt M oder um welchen Einstellweg dx' der Mittelpunkt M' ausgehend von der zweiten Erfassungsposition bewegt werden muss, um durch Bewegung in der X-Richtung den jeweiligen der Mittelpunkte M und M' in einem Punkt MX0 zu positionieren, ausgehend von welchem lediglich eine Verschiebung in Y-Richtung um den Einstellweg dy erforderlich ist, um eine Zentrierung der Pinole 46 zur geometrischen Achse 24 zu erreichen.

Da der Kreuzschlitten 40 so aufgebaut ist, dass mit diesem mittels der Maschinensteuerung 80 keine gesteuerte Bewegung in der Y-Richtung möglich ist, wird von der Zentriersteuerung 82 mittels der Maschinensteuerung 80 die Messeinheit 64 um die Spindelachse 24 so verschwenkt, dass diese in einer Messebene E4 steht, die senkrecht zur die X-Richtung definierenden Verbindungslinie V und somit parallel zur Y-Richtung verläuft und die geometrische Achse 24 schneidet.

In dieser Stellung der Messeinheit 64 in der Messebene E4 ist die Zentriersteuerung 82 in der Lage, die Verschiebung der Pinole 46 in Y-Richtung zu messen, die in gleicher Weise wie beim ersten Ausführungsbeispiel durch manuelle Einstellung der der Werkzeughalterbasis 44 zugeordneten Verstelleinheiten 54, 56 manuell möglich ist.

Hierbei kann die Zentriersteuerung 82 dann entweder den Einstellweg dy als Abstand des Mittelpunkts MX0 von der geometrischen Achse 24 anzeigen, so dass die manuelle Einstellung unter Beobachtung des Einstellwegs dy möglich ist, so lange bis der Mittelpunkt MX0 mit der geometrischen Achse 24 zusammenfällt.

Alternativ dazu ist es aber auch denkbar, dass das Schlittensystem 40 eine Y-Achse aufweist, seitens der Zentriersteuerung 82 über die Maschinensteuerung 80 die Y-Achse so anzusteuern, bis der Mittelpunkt MX0 mit der geometrischen Achse 24 zusammenfällt, wobei dies entweder durch interne Erfassung der Position in Y-Richtung seitens der Maschinensteuerung erfolgen kann oder zusätzlich unter Zuhilfenahme der Messeinheit 64 und Überwachung der Verschiebung in Y-Richtung mittels der Messeinheit 64.

Damit ist unter Zuhilfenahme der Zentriersteuerung 82 ebenfalls die Pinole 46 relativ zu Spindelachse 24 positionierbar.

**Patentansprüche**

1. Verfahren zum Positionieren eines Mittelpunkts (M) einer zweiten Werkzeugmaschineneinheit (46) einer Werkzeugmaschine (10) auf einer geometrischen Achse (24) einer ersten Werkzeugmaschineneinheit (14) der Werkzeugmaschine (10), wobei die zweite Werkzeugmaschineneinheit (46) eine zu dem Mittelpunkt (M) konzentrische abtastbare und auf einer Kreiszylinderfläche (48) liegende Kreisbahn (K) aufweist und wobei die erste Werkzeugmaschineneinheit (14) eine um eine mit der geometrischen Achse zusammenfallende Drehachse (24) drehbare Komponente (26) aufweist,
   **dadurch gekennzeichnet , dass** eine Messeinheit (64) an der ersten Werkzeugmaschineneinheit (14) relativ zu der geometrischen Achse (24) definiert angeordnet wird und mit der Messeinheit (64) die Lage der Kreisbahn (K) in einer durch die Kreisbahn (K) festgelegten geometrischen Ebene (KE) relativ zu der geometrischen Achse (24) dadurch ermittelt wird, dass mittels der Messeinheit (64) eine Bestimmung der Lage der Kreisbahn (K) durch Ermitteln der Positionen von drei in definierten Winkelabständen voneinander auf der Kreisbahn (K) liegenden Messpunkten (P1, P2, P3) relativ zu der geometrischen Achse (24) erfolgt, dass auf der Basis der Positionen der Messpunkte (P1, P2, P3) und des bekannten Radius (r) der Kreisbahn (K) die Lage des Mittelpunkts (M) der Kreisbahn (K) in der geometrischen Ebene (KE) relativ zu der geometrischen Achse (24) und einer durch die geometrische Achse (24) hindurch verlaufenden Referenzrichtung (E1, V) rechnerisch ermittelt wird und dass unter Heranziehung von werkzeugmaschinenbedingten Einstellrichtungen (X, Y) der Werkzeugmaschineneinheiten (14, 46) relativ zueinander den Einstellrichtungen (X, Y) zugeordnete Einstellwege (dx, dy) in der geometrischen Ebene (KE) zur Positionierung des Mittelpunkts (M) auf der geometrischen Achse (24) rechnerisch bestimmt werden und dass die Werkzeugmaschineneinheiten (14, 46) relativ zueinander entsprechend diesen Einstellwegen (dx, dy) bewegt werden.

2. Verfahren nach Anspruch 1, **dadurch gekennzeichnet, dass** die Positionen der drei Messpunkte (P1, P2, P3) durch Verschwenken der Messeinheit (64) um die geometrische Achse (24) in eine dem jeweiligen Messpunkt (P1, P2, P3) entsprechende und radial zur geometrischen Achse (24) verlaufende Messrichtung (MR1, MR2, MR3) festgelegt wird und in der jeweiligen Messrichtung (MR1, MR2, MR3) mittels der Messeinheit (64) die Position des jeweiligen Messpunktes (P1, P2, P3) ermittelt wird, dass insbesondere die Position des jeweiligen Messpunkts (P1, P2, P3) durch Messen eines Abstandes desselben von einer um die geometrische Achse (24) umlaufenden Referenzkreisbahn (RK) in radialer Richtung zur geometrischen Achse (24) bestimmt wird.

3. Verfahren nach einem der voranstehenden Ansprüche, **dadurch gekennzeichnet, dass** die drei Messpunkte (P1, P2, P3) so gewählt werden, dass sie innerhalb eines Winkelbereichs von 180° um die geometrische Achse (24) liegen, und/oder dass insbesondere die drei Messpunkte so gewählt werden, dass jeweils ein Winkelbereich von 90° zwischen einem ersten Messpunkt (P1) und einem zweiten Messpunkt (P2) sowie dem zweiten Messpunkt (P2) und einem dritten Messpunkt (P3) liegt.

4. Verfahren nach einem der voranstehenden Ansprüche, **dadurch gekennzeichnet, dass** die Erfassung der werkzeugmaschinenseitigen Einstellrichtungen (X, Y) durch Anordnung der Position eines der drei Messpunkte (P1, P2, P3) in einer radial zur geometrischen Achse (24) verlaufenden und zu einer der Einstellrichtungen (X, Y) parallelen geometrischen Messrichtung (MR1, MR2) erfolgt, dass insbesondere ein erster der drei Messpunkte (P1, P2, P3) in der durch die geometrische Achse (24) hindurch verlaufenden und zu einer der Einstellrichtungen (X, Y) parallelen geometrischen Messrichtung (MR1, MR2) angeordnet wird.

5. Verfahren nach einem der voranstehenden Ansprüche, **dadurch gekennzeichnet, dass** die Erfassung einer der werkzeugmaschinenseitigen Einstellrichtungen (X, Y) durch eine erste Ermittlung der Lage des Mittelpunkts (M) der zweiten Werkzeugmaschineneinheit (46) in einer ersten Erfassungsposition, eine nachfolgende Relativbewegung der beiden Werkzeugmaschineneinheiten (14, 46) längs einer ausgewählten der Einstellrichtungen (X, Y) in eine zweite Erfassungsposition und in dieser eine zweite Ermittlung der Lage des Mittelpunkts (M') der zweiten Werkzeugmaschineneinheit (46) erfolgt und dass durch Ermittlung der Ausrichtung einer Verbindungslinie (V) zwischen den Mittelpunkten (M, M') in der ersten und der zweiten Erfassungsposition die Lage und der Verlauf der ausgewählten Einstellrichtung (X, Y) bestimmt wird, dass insbesondere die Messrichtungen, in welchen die Positionen der Messpunkte (P1, P2, P3) ermittelt werden, in der ersten Erfassungsposition und in der zweiten Erfassungsposition identisch sind.

6. Verfahren nach einem der voranstehenden Ansprüche, **dadurch gekennzeichnet, dass** beim Bewegen der Werkzeugmaschineneinheiten (14, 46) in mindestens einer der Einstellrichtungen (X, Y) eine Erfassung des mindestens einen durchlaufenen Einstellwegs (dx, dy) mittels der Messeinheit (64) erfolgt, dass insbesondere zur Erfassung der Bewegung der Werkzeugmaschineneinheiten (14, 46) relativ zueinander in den Einstellrichtungen (X, Y) die Messeinheit (64) durch Verschwenken um die geometrische Achse (24) in einer jeweils parallel zur jeweiligen Einstellrichtung (X, Y) verlaufenden Messrichtung (MR1, MR2, MR3) positioniert wird.

7. Verfahren nach einem der voranstehenden Ansprüche, **dadurch gekennzeichnet, dass** von der Messeinheit (64) ermittelte Positionen der Messpunkte (P1, P2, P3) einer Rechnereinheit (84) übermittelt werden, die den Mittelpunkt (M) der Kreisbahn (K) relativ zur geometrischen Achse (24) und einer durch die geometrische Achse (24) hindurch verlaufenden Referenzrichtung (E1, V) ermittelt, dass insbesondere die Rechnereinheit (84) mit Informationen über die werkzeugmaschinenbedingten Einstellrichtungen (X, Y) Einstellwege (dx, dy) in den Einstellrichtungen (X, Y) zur Positionierung des Mittelpunkts (M) auf der geometrischen Achse (24) ermittelt.

8. Verfahren nach einem der voranstehenden Ansprüche, **dadurch gekennzeichnet, dass** die Messeinheit (64) mit der um die Drehachse (24) drehbaren Komponente (26) verbunden wird und dass mittels einer Zentriersteuerung (82) die Messeinheit (64) zur Erfassung der drei Messpunkte (P1, P2, P3) mittels der ersten Werkzeugmaschineneinheit (14) durch Ansteuerung derselben um die geometrische Achse (24) verschwenkt wird, und/oder dass insbesondere in jedem Messpunkt (P1, P2, P3) die Lage des Messpunktes (P1, P2, P3) mittels der Messeinheit (64) durch Ansteuern und Auslesen derselben mittels der Zentriersteuerung (82) ermittelt und insbesondere in der Rechnereinheit (84) abgespeichert wird, und/oder dass insbesondere zum Erfassen mindestens eines der Einstellwege (dx, dy) beim Bewegen der Werkzeugmaschineneinheit (14, 46) relativ zueinander in der mindestens einen Einstellrichtung (X, Y) die Messeinheit (64) mittels der Zentriersteuerung (82) durch Ansteuerung der ersten Werkzeugmaschineneinheit (14) in eine zu der Einstellrichtung (X, Y) parallele Messrichtung (MR1, MR2, MR3) verschwenkt wird.

9. Verfahren nach einem der Ansprüche 7 bis 8, **dadurch gekennzeichnet, dass** mittels der Zentriersteuerung (82) die Werkzeugmaschineneinheiten (14, 46) relativ zueinander durch Ansteuerung mindestens einer Bewegungseinheit (40) der Werkzeugmaschineneinheiten (14, 46) in einer der Einstellrichtungen (X) von einer ersten Erfassungsposition in eine zweite Erfassungsposition bewegt wird und dass in der zweiten Erfassungsposition in gleicher Weise wie in der ersten Erfassungsposition die Lage der Kreisbahn (K) bestimmt und die Lage des Mittelpunkts (M') des Kreisbahn (K) mittels der Rechnereinheit (84) rechnerisch ermittelt wird, dass insbesondere die Einstellrichtung (X) durch Ermitteln der Ausrichtung einer den Mittelpunkt (M) in der ersten Erfassungsposition und den Mittelpunkt (M') in der zweiten Erfassungsposition schneidenden Verbindungslinie (V) mittels der Rechnereinheit (84) rechnerisch bestimmt wird, und/oder dass insbesondere die Werkzeugmaschineneinheiten (14, 46) ausgehend von der ersten oder zweiten Erfassungsposition in der rechnerisch bestimmten Einstellrichtung (X) soweit über einen Einstellweg (dx, dx') verfahren werden, dass nach durchlaufen des Einstellwegs (dy) in der weiteren Einstellrichtung (Y) der Mittelpunkt (M) auf der geometrischen Achse (24) liegt.

10. Verfahren nach einem der Ansprüche 6 bis 9, **dadurch gekennzeichnet, dass** der Einstellweg (dy) in der weiteren Einstellrichtung (Y) von der Rechnereinheit (84) unter der Voraussetzung ermittelt wird, dass die weitere Einstellrichtung (Y) senkrecht zur zuerst rechnerisch bestimmten Einstellrichtung (X) verläuft, dass insbesondere eine Messrichtung der Messeinheit (64) durch Ansteuern der Drehung der Komponente (26) der ersten Werkzeugmaschineneinheit (14) durch die Zentriersteuerung (82) parallel zu der zweiten Einstellrichtung (Y) ausgerichtet wird und der in dieser Einstellrichtung (Y) zu durchlaufende Einstellweg (dy) gemessen wird.

11. Werkzeugmaschine umfassend eine erste Werkzeugmaschineneinheit (14) mit einer um eine mit einer geometrischen Achse zusammenfallende Drehachse (24) drehbaren Komponente (26) und eine zweite Werkzeugmaschineneinheit (46) mit einer zu einem Mittelpunkt (M) konzentrisch und auf einer Kreiszylinderfläche (48) liegenden Kreisbahn (K), wobei der Werkzeugmaschine (10) eine Messeinheit (64) zugeordnet ist, welche Positionen von auf der Kreisbahn (K) liegenden Messpunkten (P1, P2, P3) relativ zu der geometrischen Achse (24) erfasst, **dadurch gekennzeichnet, dass** der Werkzeugmaschine (10) eine Rechnereinheit (68, 84) zugeordnet ist und dass die Rechnereinheit (68, 84) Messwerte der Messeinheit (64) erfasst und abspeichert, dass die Rechnereinheit (68, 84) aus den Positionen von drei in definierten Winkelabständen auf der Kreisbahn (K) liegenden Messpunkten (P1, P2, P3) und dem bekannten Radius (r) der Kreisbahn (K) die Lage des Mittelpunkts (M) relativ zu der geometrischen Achse (24) und einer Referenzrichtung (MR1, V) ermittelt, und dass die Rechnereinheit (68, 84) mit Informationen über die werkzeugmaschinenbedingten Einstellrichtungen (X, Y) Einstwellwege (dx, dy) zur Positionierung des Mittelpunkts (M) auf der geometrischen Achse (24) ermittelt.

12. Werkzeugmaschine nach Anspruch 11, **dadurch gekennzeichnet, dass** insbesondere die Werkzeugmaschine (10) eine Maschinensteuerung (80) aufweist, welcher die Rechnereinheit (84) zugeordnet ist.

13. Werkzeugmaschine nach einem der Ansprüche 11 bis 12, **dadurch gekennzeichnet, dass** die Messeinheit (64) mit der um die Drehachse (24) drehbaren Komponente (26) verbunden ist und dass mittels einer Zentriersteuerung (82) die Messeinheit (64) zur Erfassung der drei Messpunkte (P1, P2, P3) mittels der ersten Werkzeugmaschineneinheit (14) durch Ansteuerung derselben um die geometrische Achse (24) verschwenkt wird, dass insbesondere in jedem Messpunkt (P1, P2, P3) die Lage des Messpunktes (P1, P2, P3) mittels der Messeinheit (64) durch Ansteuern und Auslesen derselben mittels der Zentriersteuerung (82) ermittelt und insbesondere in der Rechnereinheit (84) abgespeichert wird, und/oder dass insbesondere die Zentriersteuerung (82) zum Erfassen von mindestens einem der Einstellwege (dx, dy) beim Bewegen der Werkzeugmaschineneinheit (14, 46) relativ zueinander in der mindestens einen Einstellrichtung (X, Y) die Messeinheit (64) durch Ansteuerung der ersten Werkzeugmaschineneinheit (14) in eine zu der Einstellrichtung (X, Y) parallele Messrichtung (MR1, MR2, MR3) verschwenkt.

14. Werkzeugmaschine nach Anspruch 13, **dadurch gekennzeichnet, dass** die Zentriersteuerung (82) nach Ermittlung der Lage des Mittelpunkts (M) der Kreisbahn (K) in einer ersten Erfassungsposition die Werkzeugmaschineneinheiten (14, 46) relativ zueinander durch Ansteuerung mindestens einer Bewegungseinheit (40) der Werkzeugmaschineneinheiten (14, 46) in einer der Einstellrichtungen (X) von der ersten Erfassungsposition in eine zweite Erfassungsposition bewegt und dass die Rechnereinheit (84) in der zweiten Erfassungsposition in gleicher Weise wie in der ersten Erfassungsposition die Lage der Kreisbahn (K) bestimmt und die Lage des Mittelpunkts (M') des Kreisbahn (K) mittels der Rechnereinheit (84) rechnerisch ermittelt, dass insbesondere die Rechnereinheit (84) die Einstellrichtung (X) durch Ermitteln der Ausrichtung einer den Mittelpunkt (M) in der ersten Erfassungsposition und den Mittelpunkt (M') in der zweiten Erfassungsposition schneidenden Verbindungslinie (V) mittels der Rechnereinheit (84) rechnerisch bestimmt dass insbesondere die Zentriersteuerung (82) die Werkzeugmaschineneinheiten (14, 46) ausgehend von der ersten oder zweiten Erfassungsposition in der rechnerisch bestimmten Einstellrichtung (X) soweit über einen Einstellweg (dx, dx') verfährt, dass nach durchlaufen eines weiteren Einstellwegs (dy) in der weiteren Einstellrichtung (Y) der Mittelpunkt (M) auf der geometrischen Achse (24) liegt.

**15.** Werkzeugmaschine nach einem der Ansprüche 11 bis 14, **dadurch gekennzeichnet, dass** diese nach einem Verfahren gemäß den Ansprüchen 1 bis 10 arbeitet.

## Claims

**1.** A method for positioning a centre point (M) of a second machine tool unit (46) of a machine tool (10) on a geometric axis (24) of a first machine tool unit (14) of the machine tool (10), wherein the second machine tool unit (46) has a circular path (K) that is concentric with the centre point (M), is scannable and lies on a circular cylindrical surface (48), and wherein the first machine tool unit (14) has a component (26) that is rotatable about an axis of rotation (24) coincident with the geometric axis, **characterised in that** a measuring unit (64) is arranged on the first machine tool unit (14) in a defined manner relative to the geometric axis (24) and by means of the measuring unit (64) the position of the circular path (K) in a geometric plane (KE), defined by the circular path (K), relative to the geometric axis (24) is established **in that** the position of the circular path (K) is ascertained by means of the measuring unit (64) by establishing the positions of three measurement points (P1, P2, P3) arranged at defined angular spacings from one another over the circular path (K) relative to the geometric axis (24), **in that** the position of the centre point (M) of the circular path (K) in the geometric plane (KE) relative to the geometric axis (24) and a reference direction (E1, V) running through the geometric axis (21) is calculated on the basis of the positions of the measurement points (P1, P2, P3) and the known radius (r) of the circular path (K), and **in that**, using machine tool-based adjustment directions (X, Y) of the machine tool units (14, 46) relative to one another, adjustment paths (dx, dy) in the geometric plane (KE), which are associated with the adjustment directions (X, Y), for positioning the centre point (M) on the geometric axis (24) are calculated, and **in that** the machine tool units (14, 46) are moved relative to one another in accordance with these adjustment paths (dx, dy).

**2.** A method according to claim 1, **characterised in that** the positions of the three measurement points (P1, P2, P3) are defined by pivoting the measuring unit (64) about the geometric axis (24) in a measurement direction (MR1, MR2, MR3) corresponding to the particular measurement point (P1, P2, P3) and running radially relative to the geometric axis (24), and the position of the particular measurement point (P1, P2, P3) in the corresponding measurement direction (MR1, MR2, MR3) is established by means of the measuring unit (64), **in that** in particular the position of the particular measurement point (P1, P2, P3) is ascertained by measuring a spacing thereof from a reference circular path (RK) running around the geometric axis (24) in a radial direction relative to the geometric axis (24).

**3.** A method according to any one of the preceding claims, **characterised in that** the three measurement points (P1, P2, P3) are selected such that they lie within an angular range of 180° about the geometric axis (24), and/or **in that** in particular the three measurement points are selected such that an angular range of 90° lies between a first measurement point (P1) and a second measurement point (P2) and between the second measurement point (P2 and a third measurement point (P3).

**4.** A method according to any one of the preceding claims, **characterised in that** the machine tool-based adjustment directions (X, Y) are determined by arranging the position of one of the three measurement points (P1, P2, P3) in a geometric measurement direction (MR1, MR2) running radially relative to the geometric axis (24) and parallel to one of the adjustment directions (X, Y), **in that** in particular a first of the three measurement points (P1, P2, P3) is arranged in the geometric measurement direction (MR1, MR2) running through the geometric axis (24) and parallel to one of the adjustment directions (X, Y).

**5.** A method according to any one of the preceding claims, **characterised in that** one of the machine tool-based adjustment directions (X, Y) is determined by a first establishment of the position of the centre point (M) of the second machine tool unit (46) in a first determination position, a subsequent relative movement of the two machine tool units (14, 46) along a selected one of the adjustment directions (X, Y) into a second determination position, and in this position a second establishment of the position of the centre point (M') of the second machine tool unit (46), and **in that** the position and course of the selected adjustment direction (X, Y) are ascertained by establishing the orientation of a connecting line (V) between the centre points (M, M') in the first and second determination position, **in that** in particular the measurement directions in which the positions of the measurement points (P1, P2, P3) are established are identical in the first determination position and in the second determination position.

**6.** A method according to any one of the preceding claims, **characterised in that**, as the machine tool units (14, 46) are moved in at least one of the adjustment directions (X, Y), the at least one continuous adjustment path (dx, dy) is determined by means of the measuring unit (64), **in that** in particular in order to determine the movement of the machine tool units (14, 46) relative to one another in the adjustment directions (X, Y), the measuring unit (64) is positioned, by pivoting about the geometric axis (24), in a measurement direction (MR1, MR2, MR3) running parallel to the particular adjustment direction (X, Y).

7. A method according to any one of the preceding claims, **characterised in that** positions of the measurement points (P1, P2, P3) established by the measuring unit (64) are transmitted to a computer unit (84), which establishes the centre point (M) of the circular path (K) relative to the geometric axis (24) and a reference direction (E1, V) running through the geometric axis (24), **in that** in particular the computer unit (84), using information regarding the machine tool-based adjustment directions (X, Y), establishes adjustment paths (dx, dy) in the adjustment directions (X, Y) for positioning the centre point (M) on the geometric axis (24).

8. A method according to any one of the preceding claims, **characterised in that** the measuring unit (64) is connected to the component (26) rotatable about the axis of rotation (24), and **in that**, by means of a centring controller (82), the measuring unit (64) is pivoted about the geometric axis (24) by means of the first machine tool unit (14) by control thereof in order to determine the three measurement points (P1, P2, P3), and/or **in that** in particular in each measurement point (P1, P2, P3) the position of the measurement point (P1, P2, P3) is established by means of the measuring unit (64) by actuation and reading thereof by means of the centring controller (82) and in particular is stored in the computer unit (84), and/or **in that** in particular in order to determine at least one of the adjustment paths (dx, dy), as the machine tool units (14, 46) move relative to one another in the at least one adjustment direction (X, Y) the measuring unit (64) is pivoted in a measurement direction (MR1, MR2, MR3) parallel to the adjustment direction (X, Y) by means of the centring controller (82) by control of the first machine tool unit (14).

9. The method according to claim 7 or 8, **characterised in that** by means of the centring controller (82) the machine tool units (14, 46) are moved relative to one another, by control of at least one movement unit (40) of the machine tool units (14, 46), in one of the adjustment directions (X) from a first determination position into a second determination position, and **in that** in the second determination position the position of the circular path (K) is ascertained in the same way as in the first determination position, and the position of the centre point (M') of the circular path (K) is calculated by means of the computer unit (84), **in that** in particular the adjustment direction (X) is calculated by means of the computer unit (84) establishing the orientation of a connecting line (V) traversing the centre point (M) in the first determination position and traversing the centre point (M') in the second determination position, and/or **in that** in particular the machine tool units (14, 46), starting from the first or second determination position, are moved in the calculated adjustment direction (X) over an adjustment path (dx, dx') to such an extent that once the adjustment path (dy) in the further adjustment direction (Y) has been travelled over, the centre point (M) lies on the geometric axis (24).

10. A method according to any one of claims 6 to 9, **characterised in that** the adjustment path (dy) is ascertained in the further adjustment direction (Y) by the computer unit (84) on the proviso that the further adjustment direction (Y) runs perpendicularly to the adjustment direction (X) first calculated, **in that** in particular a measurement direction of the measuring unit (64) is oriented parallel to the second adjustment direction (Y) by control of the rotation of the component (26) of the first machine tool unit (14) by the centring controller (82), and the adjustment path (dy) that is to be travelled over in this adjustment direction (Y) is measured.

11. A machine tool comprising a first machine tool unit (14) with a component (26) that is rotatable about an axis of rotation (24) coincident with a geometric axis and comprising a second machine tool unit (46) with a circular path (K) that is concentric with the centre point (M) and lies on a circular cylindrical surface (48), wherein the machine tool (10) is associated with a measuring unit (64) which determines positions of measurement points (P1, P2, P3) lying on the circular path (K) relative to the geometric axis (24), **characterised in that** the machine tool (10) is associated with a computer unit (68, 84), and **in that** the computer unit (68, 84) determines and stores measurement values of the measuring unit (64) **in that** the computer unit (68, 84) establishes the position of the centre point (M) relative to the geometric axis (24) and relative to a reference direction (MR1, V) on the basis of the positions of three measurement points (P1, P2, P3) lying at defined angular spacings on the circular path (K) and on the basis of the known radius (r) of the circular path (K), and **in that** the computer unit (68, 84), using information regarding the machine tool-based adjustment directions (X, Y), establishes adjustment paths (dx, dy) for positioning the centre point (M) on the geometric axis (24).

12. A machine tool according to claim 11, **characterised in that** in particular the machine tool (10) comprises a machine controller (80), which is associated with the computer unit (84).

**13.** A machine tool according to claim 11 or 12, **characterised in that** the measuring unit (64) is connected to the component (26) that is rotatable about the axis of rotation (24), and **in that** by means of a centring controller (82) the measuring unit (64) for determining the three measurement points (P1, P2, P3) is pivoted about the geometric axis (24) by means of the first machine tool unit (14) by control thereof, **in that** in particular for each measurement point (P1, P2, P3) the position of the measurement point (P1, P2, P3) is established by means of the measuring unit (64) by actuation and reading thereof by means of the centring controller (82) and in particular is stored in the computer unit (84), and/or **in that** in particular the centring controller (82), for determining at least one of the adjustment paths (dx, dy), as the machine tool units (14, 46) move relative to one another in the at least one adjustment direction (X, Y) pivots the measuring unit (64), by control of the first machine tool unit (14), in a measurement direction (MR1, MR2, MR3) parallel to the adjustment direction (X, Y).

**14.** Machine tool according to claim 13, **characterised in that** the centring controller (82), after establishing the position of the centre point (M) of the circular path (K) in a first determination position, moves the machine tool units (14, 46) relative to one another, by control of at least one movement unit (40) of the machine tool units (14, 46), in one of the adjustment directions (X) from the first determination position into a second determination position, and **in that** the computer unit (84) in the second determination position ascertains the position of the circular path (K) in the same way as in the first determination position, and the position of the centre point (M') of the circular path (K) is calculated by means of the computer unit (84), **in that** in particular the computer unit (84) calculates the adjustment direction (X) by means of the computer unit (84) establishing the orientation of a connecting line (V) traversing the centre point (M) in the first determination position and traversing the centre point (M') in the second determination position **in that** in particular the centring controller (82) moves the machine tool units (14, 46), starting from the first or second determination position, in the calculated adjustment direction (X) over an adjustment path (dx, dx') to such an extent that once a further adjustment path (dy) has been travelled over in the further adjustment direction (Y), the centre point (M) lies on the geometric axis (24).

**15.** A machine tool according to any one of claims 11 to 14, **characterised in that** said machine tool operates by a method according to any one of claims 1 to 10.

## Revendications

**1.** Procédé destiné à positionner un point central (M) d'une seconde unité de machine-outil (46) d'une machine-outil (10) sur un axe géométrique (24) d'une première unité de machine-outil (14) de la machine-outil (10), dans lequel la seconde unité de machine-outil (46) présente une trajectoire circulaire (K) concentrique à l'égard du point central (M), pouvant être balayée et se situant sur une surface de cylindre circulaire (48) et dans lequel la première unité de machine-outil (14) présente un composant (26) en rotation autour d'un axe de rotation coïncidant avec l'axe géométrique (24),
**caractérisé en ce qu'**une unité de mesure (64) est agencée contre la première unité de machine-outil (14) de façon définie par rapport à l'axe géométrique (24), et l'emplacement de la trajectoire circulaire (K), dans un plan (KE) géométrique établi par la trajectoire circulaire (K) par rapport à l'axe géométrique (24), est estimé avec l'unité de mesure (64), **en ce qu'**au moyen de l'unité de mesure (64) est effectuée une détermination de l'emplacement de la trajectoire circulaire (K) par rapport à l'axe géométrique (24) en estimant les positions de trois points de mesure (P1, P2, P3) se situant à des distances angulaires définies les unes par rapport aux autres sur la trajectoire circulaire (K), **en ce que**, sur la base des positions des points de mesure (P1, P2, P3) et du rayon (r) connu de la trajectoire circulaire (K), l'emplacement du point central (M) de la trajectoire circulaire (K) dans le plan (KE) par rapport à l'axe géométrique (24) et à une direction de référence (E1, V) s'étendant à travers l'axe géométrique (24) est arithmétiquement estimé et **en ce que**, en utilisant des directions de réglage (X, Y) basées sur la machine-outil des unités de machine-outil (14, 46) l'une par rapport à l'autre, des chemins de réglage (dx, dy) attribués aux directions de réglage (X, Y) dans le plan (KE) géométrique sont arithmétiquement déterminés pour positionner le point central (M) sur l'axe géométrique (24) et **en ce que** les unités de machine-outil (14, 46) sont déplacées l'une par rapport à l'autre en fonction de ces chemins de réglage (dx, dy).

**2.** Procédé selon la revendication 1, **caractérisé en ce que** les positions des trois points de mesure (P1, P2, P3) est établie en faisant pivoter l'unité de mesure (64) autour de l'axe géométrique (24) dans une direction de mesure (MR1, MR2, MR3) s'étendant radialement par rapport à l'axe géométrique (24) et en fonction du point de mesure (P1, P2, P3), et la position du point de mesure (P1, P2, P3) respectif est estimée dans la direction de mesure (MR1, MR2, MR3) respective au moyen de l'unité de mesure (64), **en ce qu'**en particulier la position du point de mesure (P1, P2, P3) respectif est déterminée en mesurant une distance de celui-ci depuis une trajectoire circulaire de référence (RK) périphérique autour de l'axe géométrique (24) dans la direction radiale par rapport à l'axe géométrique (24).

3. Procédé selon l'une des revendications précédentes, **caractérisé en ce que** les trois points de mesure (P1, P2, P3) sont sélectionnés de sorte qu'ils se situent à l'intérieur d'une plage angulaire de 180° autour de l'axe géométrique (24), et/ou **en ce qu'**en particulier les trois points de mesure sont sélectionnés de sorte qu'une plage angulaire de 90° se situe respectivement entre un premier point de mesure (P1) et un deuxième point de mesure (P2) ainsi qu'entre le deuxième point de mesure (P2) et un troisième point de mesure (P3).

4. Procédé selon l'une des revendications précédentes, **caractérisé en ce que** la définition des directions de réglage (X, Y) du côté de la machine-outil est effectuée en agençant la position de l'un des trois points de mesure (P1, P2, P3) dans une direction de mesure (MR1, MR2) géométrique se déroulant radialement par rapport à l'axe géométrique (24) et parallèle à l'une des directions de réglage (X, Y), **en ce qu'**en particulier un premier des trois points de mesure (P1, P2, P3) est agencé dans la direction de mesure (MR1, MR2) géométrique s'étendant à travers l'axe géométrique (24) et parallèle à l'une des directions de réglage (X, Y).

5. Procédé selon l'une des revendications précédentes, **caractérisé en ce que** la définition de l'une des directions de réglage (X, Y) du côté de la machine-outil est effectuée en effectuant une première estimation de l'emplacement du point central (M) de la seconde unité de machine-outil (46) dans une première position de définition, un déplacement relatif suivant des deux unités de machine-outil (14, 46) dans l'une sélectionnée des directions de réglage (X, Y) dans une deuxième position de définition et, dans celle-ci, une seconde estimation de l'emplacement du point central (M') de la seconde unité de machine-outil (46), et **en ce que** l'emplacement et le tracé de la direction de réglage (X, Y) sélectionnée est déterminée en effectuant le calcul de l'orientation d'une ligne de liaison (V) entre les points centraux (M, M') dans la première et la seconde position de définition, **en ce qu'**en particulier les directions de mesure, dans lesquelles les positions des points de mesure (P1, P2, P3) sont estimées, sont identiques dans la première position de définition et dans la seconde position de définition.

6. Procédé selon l'une des revendications précédentes, **caractérisé en ce que**, lors du déplacement des unités de machine-outil (14, 46) dans au moins l'une des directions de réglage (X, Y), une définition du au moins un chemin de réglage (dx, dy) parcouru est effectuée au moyen de l'unité de mesure (64), **en ce qu'**en particulier, pour définir le déplacement des unités de machine-outil (14, 46) l'une par rapport à l'autre dans les directions de réglage (X, Y), l'unité de mesure (64) est positionnée par pivotement autour de l'axe géométrique (24) dans une direction de mesure (MR1, MR2, MR3) s'étendant respectivement en parallèle de la direction de réglage (X, Y) respective.

7. Procédé selon l'une des revendications précédentes, **caractérisé en ce que** des positions des points de mesure (P1, P2, P3) estimées par l'unité de mesure (64) sont transmises à une unité de calcul (84) qui estime le point central (M) de la trajectoire circulaire (K) par rapport à l'axe géométrique (24) et à une direction de référence (E1, V) s'étendant à travers l'axe géométrique (24), **en ce qu'**en particulier l'unité de calcul (84) estime, avec des informations sur les directions de réglage (X, Y) basées sur la la machine-outil, des chemins de réglage (dx, dy) dans les directions de réglage (X, Y) pour positionner le point central (M) sur l'axe géométrique (24).

8. Procédé selon l'une des revendications précédentes, **caractérisé en ce que** l'unité de mesure (64) est reliée au composant (26) en rotation autour de l'axe de rotation (24) et **en ce que**, au moyen d'une commande de centrage (82), l'unité de mesure (64) est pivotée pour définir les trois points de mesure (P1, P2, P3) au moyen de la première unité de machine-outil (14) en commandant celle-ci autour de l'axe géométrique (24), et/ou **en ce qu'**en particulier, dans chaque point de mesure (P1, P2, P3), l'emplacement du point de mesure (P1, P2, P3) est estimé au moyen de l'unité de mesure (64) en commandant et lisant celle-ci au moyen de la commande de centrage (82) et en particulier stockée dans l'unité de calcul (84), et/ou en ce qu'en particulier, pour définir au moins l'un des chemins de réglage (dx, dy) lors du déplacement de l'unité de machine-outil (14, 46) l'une par rapport à l'autre dans la au moins une direction de réglage (X, Y), l'unité de mesure (64) est pivotée au moyen de la commande de centrage (82) en commandant la première unité de machine-outil (14) dans une direction de mesure (MR1, MR2, MR3) parallèle à la direction de réglage (X, Y).

9. Procédé selon l'une des revendications 7 à 8, **caractérisé en ce que**, au moyen de la commande de centrage (82), les unités de machine-outil (14, 46) est déplacée l'une par rapport à l'autre en commandant au moins une unité de déplacement (40) des unités de machine-outil (14, 46) dans l'une des directions de réglage (X) depuis une première position de définition vers une seconde position de définition, et **en ce que** dans la seconde position de définition, de la même manière que dans la première position de définition, la position de la trajectoire circulaire (K) est déterminée et la position du point central (M') de la trajectoire circulaire (K) est arithmétiquement estimée au moyen de l'unité de calcul (84), **en ce qu'**en particulier la direction de réglage (X) est arithmétiquement déterminée au moyen de l'unité de calcul (84) en estimant l'orientation d'une ligne de liaison (V) coupant le point central (M) dans la première position de définition et le point central (M') dans la seconde position de définition, et/ou **en ce qu'**en particulier les unités de machine-outil (14, 46) sont déplacées via un chemin de réglage (dx, dx'), en partant de la première ou de la seconde position de définition dans la direction de réglage (X) arithmétiquement déterminée, jusqu'à ce qu'après le parcours du chemin de réglage (dy) dans l'autre direction de réglage (Y) le point central (M) se trouve sur l'axe géométrique (24).

10. Procédé selon l'une des revendications 6 à 9, **caractérisé en ce que** le chemin de réglage (dy) dans l'autre direction de réglage (Y) est estimé par l'unité de calcul (84) sous condition que l'autre direction de réglage (Y) s'étende perpendiculairement à la direction de réglage (X) arithmétiquement déterminée en premier, **en ce qu'**en particulier une direction de mesure de l'unité de mesure (64) est orientée parallèlement à la seconde direction de réglage (Y) par la commande de centrage (82) en commandant la rotation du composant (26) de la première unité de machine-outil (14), et le chemin de réglage (dy) à parcourir dans cette direction de réglage (Y) est mesuré.

11. Machine-outil comprenant une première unité de machine-outil (14) avec un composant (26) en rotation autour d'un axe de rotation (24) coïncidant avec un axe géométrique et une seconde unité de machine-outil (46) avec une trajectoire circulaire (K) concentrique à l'égard d'un point central (M) et se situant sur une surface de cylindre circulaire (48), dans laquelle à la machine-outil (10) est attribuée une unité de mesure (64), laquelle définit des positions de points de mesure (P1, P2, P3) se situant sur la trajectoire circulaire (K) par rapport à l'axe géométrique (24), **caractérisée en ce qu'**à la machine-outil (10) est attribuée une unité de calcul (68, 84) et **en ce que** l'unité de calcul (68, 84) définit et stocke des valeurs de mesure de l'unité de mesure (64), **en ce que** l'unité de calcul (68, 84) estime, à partir des positions de trois points de mesure (P1, P2, P3) se situant à des distances angulaires définies sur la trajectoire circulaire (K) et du rayon (r) connu de la trajectoire circulaire (K), l'emplacement du point central (M) par rapport à l'axe géométrique (24) et à une direction de référence (MR1, V), et **en ce que** l'unité de calcul (68, 84) estime, avec des informations sur les directions de réglage (X, Y) basées sur la machine-outil, des chemins de réglage (dx, dy) pour positionner le point central (M) sur l'axe géométrique (24).

12. Machine-outil selon la revendication 11, **caractérisée en ce qu'**en particulier la machine-outil (10) présente une commande de machine (80), à laquelle est attribuée l'unité de calcul (84).

13. Machine-outil selon l'une des revendications 11 à 12, **caractérisée en ce que** l'unité de mesure (64) est reliée au composant(26) en rotation autour de l'axe de rotation (24) et **en ce que**, au moyen d'une commande de centrage (82), l'unité de mesure (64) est pivotée pour définir les trois points de mesure (P1, P2, P3) au moyen de la première unité de machine-outil (14) en commandant celle-ci autour de l'axe géométrique (24), **en ce qu'**en particulier, dans chaque point de mesure (P1, P2, P3), l'emplacement du point de mesure (P1, P2, P3) est estimé au moyen de l'unité de mesure (64) en commandant et lisant celle-ci au moyen de la commande de centrage (82) et en particulier stocké dans l'unité de calcul (84), et/ou **en ce qu'**en particulier, pour saisir au moins l'un des chemins de réglage (dx, dy) lors du déplacement de l'unité de machine-outil (14, 46) l'une par rapport à l'autre dans la au moins une direction de réglage (X, Y), la commande de centrage (82) fait pivoter l'unité de mesure (64) en commandant la première unité de machine-outil (14) dans une direction de mesure (MR1, MR2, MR3) parallèle à la direction de réglage (X, Y).

14. Machine-outil selon la revendication 13, **caractérisée en ce que** la commande de centrage (82), après calcul de l'emplacement du point central (M) de la trajectoire circulaire (K) dans une première position de définition, déplace les unités de machine-outil (14, 46) l'une par rapport à l'autre en commandant au moins une unité de déplacement (40) des unités de machine-outil (14, 46) dans l'une des directions de réglage (X) depuis la première position de définition vers une seconde position de définition, et **en ce que** l'unité de calcul (84) dans la seconde position de définition, de la même manière que dans la première position de définition, détermine l'emplacement de la trajectoire circulaire (K), et l'emplacement du point central (M') de la trajectoire circulaire (K) est arithmétiquement estimé au moyen de l'unité de calcul (84), **en ce qu'**en particulier l'unité de calcul (84) détermine arithmétiquement au moyen de l'unité de calcul (84) la direction de réglage (X) en estimant l'orientation d'une ligne de liaison (V) coupant le point central (M) dans la première position de définition et le point central (M') dans la seconde position de définition, **en ce qu'**en particulier la commande de centrage (82) déplace les unités de machine-outil (14, 46) via un chemin de réglage (dx, dx'), en partant de la première ou de la seconde position de définition dans la direction de réglage (X) arithmétiquement déterminée, jusqu'à ce qu'après le parcours d'un autre chemin de réglage (dy) dans l'autre direction de réglage (Y) le point central (M) se trouve sur l'axe géométrique (24).

15. Machine-outil selon l'une des revendications 11 à 14, **caractérisée en ce que** celle-ci opère selon un procédé selon les revendications 1 à 10.

FIG.1

EP 3 453 487 B1

FIG.2

# FIG.3

FIG.4

EP 3 453 487 B1

# FIG.5

# FIG.6

FIG.7

FIG.8

# FIG.9

FIG.10

EP 3 453 487 B1

# FIG.11

# FIG.12

FIG.13

FIG.14

# FIG.15

FIG.16

FIG.17

# FIG.18

# FIG.19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 7718280